Europäisches Patentamt

(19)   European Patent Office

Office européen des brevets

(11)   **EP 0 580 449 B1**

(12)   **EUROPEAN PATENT SPECIFICATION**

(45) Date of publication and mention
of the grant of the patent:
**27.01.1999 Bulletin 1999/04**

(51) Int. Cl.⁶: **B41J 2/21**, B41M 5/34,
C09D 11/02

(21) Application number: **93305832.3**

(22) Date of filing: **23.07.1993**

(54) **Ink jet recording method employing inks of different characteristics and apparatus therefor**

Tintenstrahlaufzeichnungsverfahren unter Verwendung von Tinten mit verschiedenen Merkmalen und Vorrichtung dafür

Méthode d'enregistrement à jet d'encre employant des encres à différentes caractéristiques et appareil pour cela

(84) Designated Contracting States:
**AT BE CH DE DK ES FR GB GR IE IT LI LU NL PT SE**

(30) Priority: **24.07.1992 JP 198656/92**
**31.07.1992 JP 205548/92**
**30.10.1992 JP 292542/92**
**30.10.1992 JP 293010/92**
**30.10.1992 JP 293022/92**

(43) Date of publication of application:
**26.01.1994 Bulletin 1994/04**

(73) Proprietor:
**CANON KABUSHIKı KAISHA**
**Tokyo (JP)**

(72) Inventors:
• **Matsubara, Miyuki,**
**c/o Canon Kabushiki Kaisha**
**Tokyo (JP)**
• **Fujita, Takayuki,**
**c/o Canon Kabushiki Kaisha**
**Tokyo (JP)**
• **Hirabayashi, Hiromitsu,**
**c/o Canon Kabushiki Kaisha**
**Tokyo (JP)**
• **Inoue, Tetsurou,**
**c/o Canon Kabushiki Kaisha**
**Tokyo (JP)**
• **Aoki, Makoto,**
**c/o Canon Kabushiki Kaisha**
**Tokyo (JP)**

• **Kikuta, Masaya,**
**c/o Canon Kabushiki Kaisha**
**Tokyo (JP)**
• **Moriyama, Jiro,**
**c/o Canon Kabushiki Kaisha**
**Tokyo (JP)**
• **Nagoshi, Shigeyasu,**
**c/o Canon Kabushiki Kaisha**
**Tokyo (JP)**
• **Yamamoto, Mayumi,**
**c/o Canon Kabushiki Kaisha**
**Tokyo (JP)**
• **Koitabashi, Noribumi,**
**c/o Canon Kabushiki Kaisha**
**Tokyo (JP)**
• **Takizawa, Yoshihisa ,**
**c/o Canon Kabushiki Kaisha**
**Tokyo (JP)**
• **Inui, Toshiharu,**
**c/o Canon Kabushiki Kaisha**
**Tokyo (JP)**
• **Yokoi, Hideto,**
**c/o Canon Kabushiki Kaisha**
**Tokyo (JP)**
• **Sugimoto, Hitoshi,**
**c/o Canon Kabushiki Kaisha**
**Tokyo (JP)**
• **Gotoh, Fumihiro,**
**c/o Canon Kabushiki Kaisha**
**Tokyo (JP)**
• **Uetuki, Masaya,**
**c/o Canon Kabushiki Kaisha**
**Tokyo (JP)**

(74) Representative:
  **Beresford, Keith Denis Lewis et al**
  **BERESFORD & Co.**
  **2-5 Warwick Court**
  **High Holborn**
  **London WC1R 5DJ (GB)**

(56) References cited:
  **EP-A- 455 389          EP-A- 517 468**
  **WO-A-91/14578          US-A- 4 957 553**

  • **PATENT ABSTRACTS OF JAPAN, unexamined
    applications, M section, vol. 15, no. 370,
    September 18, 1991, THE PATENT OFFICE
    JAPANESE GOVERNMENT page 10 M 1159**

**Description**

BACKGROUND OF THE INVENTION

Field of the Invention

The present invention relates to a color image forming method capable of recording a sharp color image with a high density and an apparatus therefor, or a color ink jet recording method, and more particularly to a color ink jet recording method utilizing color inks for example of yellow (Y), magenta (M) and cyan (C) or green (G), red (R) and blue (B) and black (Bk) ink.

The present invention is applicable to any equipment utilizing a recording medium such as paper, fabric, non-woven cloth or a overhead projector sheet, and the examples of such equipment include office equipment such as a printer, a copying machine or a facsimile apparatus, and industrial equipment utilized for mass production.

Related Background Art

The ink jet recording has been utilized in printers, copying machines, facsimile apparatus etc. because of the advantages of low noise, low running cost, ease of compactization and ease of color image formation.

In general, the ink jet recording achieves formation of a color image by the use of three color inks of cyan, magenta and yellow, or of four color inks additionally including black ink.

More specifically, in the conventional color ink jet recording apparatus, there are known a method which does not utilize black ink but forms black color by mixing yellow, magenta and cyan color inks or green, red and blue color inks in an area to be recorded black, and a method which applies black ink, prepared in advance, to the black recording area.

These conventional color recording methods are merely compared as to the preferability of the black color obtained by three color inks and that obtained by black ink, but the black ink and the three color inks are assumed to be of comparable properties.

For obtaining a color image of high development without ink blotting, the conventional ink jet recording methods have required an exclusive sheet provided with an ink absorbing layer. Recent improvements in ink have realized printing on so-called "plain paper" which is commonly utilized in the printers and copying machines. However, the print quality (or dignity) on such plain paper is still in an insufficient level. A major factor for such insufficiency lies in the balance between the mutual blotting of color inks and the black recording quality (particularly black character recording quality).

In forming a color image on plain paper by ink jet recording, there are generally employed rapid-drying inks having a high penetration speed into the plain paper. There is thus obtained a high-quality image without mutual blotting among the color inks, but such image is generally deficient in the overall density, and, around the recorded image area of each color, there is often observed so-called feathering phenomenon, or slight ink blotting along the paper fibers.

Such feathering is relatively non-apparent in the color image area, but becomes conspicuous in the black image area, leading to deterioration of the recording quality. Particularly when the black image is a black character, the character appears unsharp and unclear, regarded as of a poor quality.

Therefore, for obtaining a black recording of high quality with reduced feathering, there has to be used black ink with a relatively low penetration speed in the plain paper. In such case, however, at the boundary between a black recorded area and a recorded area of another color, there is generated blotting of the ink of said another color, thereby significantly deteriorating the print quality.

Also the conventional ink jet recording methods have been associated with the following drawback.

The ink employed in the conventional ink jet recording is principally composed of water, to which added is water-soluble high-boiling solvent such as glycol, for the purposes of prevention of ink drying and of nozzle blocking. Recording on plain paper with such ink may give rise to an insufficient image density, due to the penetration of ink into the interior of the recording paper, or an uneven image density presumably due to an uneven distribution of the filler or the sizing material on the paper surface. Particularly in case of forming a color image, since plural color inks are superposed in succession prior to the image fixation, there are observed color blotting and uneven color mixing (hereinafter called bleeding) at the boundary of image areas of different colors, so that a satisfactory image cannot be obtained.

For resolving such drawbacks, the Japanese Patent Laid-open Application No. 55-65269 discloses the use of ink containing a compound enhancing the penetrating ability of the ink, such as a surfactant, and the Japanese Patent Laid-open Application No. 55-66976 discloses the use of ink principally composed of volatile solvent. However, although the former method can suppress the bleeding to a certain extent, the increased penetrating property of ink into the recording sheet causes the ink to penetrate with the colorant into the deep interior of the recording paper, thus resulting in a lowered image density or a deteriorated image sharpness. Also the enhanced wetting property to the paper surface ink spreading, thus leading to a lowered resolution or ink blotting, and the loss of print quality is undesirable particularly in case of forming a black character. Also the latter method is associated, in addition to the above-mentioned drawbacks, with the nozzle blocking due to the solvent evaporation at the nozzles of the recording head.

As explained in the foregoing, the prevention of bleeding of the inks of black and other colors and the establishment of black print quality, or the prevention of blotting of the inks of black and other colors and the reduction of feathering particularly in the black ink are mutually incompatible requirements in improving the color recording quality. For meeting these requirements, there have been proposed following recording methods.

The Japanese Patent Laid-open Application No. 3-146355 proposes a method of not recording an area along the boundary between a black image area and a color image area. This method, however, is associated with a drawback that the data to be recorded are subjected to a variation.

Also the Japanese Patent Laid-open Application No. 4-158049 proposes a method of utilizing recording heads of plural colors for color recording and a recording head for character recording, which are switched according to the image to be recorded. This method, however, requiring the character recording head in addition to the conventional plural heads for color recording, is inevitably associated with an increase in the cost and in the dimension of the apparatus.

Also the Japanese Patent Laid-open Application No. 4-147866 proposes a recording method in which the fixing time for color inks is made shorter than that for black ink and shorter than a predetermined time. In this method, however, unfixed black ink flows into the area of a previously fixed color ink, thereby deteriorating the bleeding between the black color and other colors, so that a satisfactory image cannot be obtained.

EP-A-0517468 discloses an ink jet recording method and apparatus using a plurality of inks of different colors (Y, M, C, K) wherein the penetrability of at least one ink is caused to differ from that of the other inks, allowing improved feathering at boundaries between inks of different colors. This art is citable under Article 54(3) only and is not citable against this patent in Ireland.

In accordance with the above, the present invention provides methods and apparatuses as set out in the appended claims.

In consideration of the foregoing, an embodiment of the present invention provides a color image forming method with liquids, capable of securely providing a sharp color image of a high density, and a recording apparatus therefor.

An embodiment of the present invention provides a color ink jet recording method capable, in case a black image area is present at least independently from color image area, of forming said black image area with a high density and with high recording method by discharging an ink droplet through film boiling induced by thermal energy or other record improving technologies, and a recording apparatus utilizing such color image forming method.
quality without feathering, and also of providing a sharp image without ink blotting at the boundary between a color image area and a black image area, and a color ink jet recording apparatus therefor.

An embodiment of the present invention provides, in case of recording an independent black image area not contacting a color image area, to form said black image area with a high density and with high quality with suppressed feathering, and, in other image areas, to achieve excellent recording quality without ink blotting between black and other colors, thereby attaining black recording of high quality and color recording of high quality in compatible manner.

An embodiment of the present invention provides, in case of recording an independent black image area not contacting a color image area, to form said black image area with a high density and with high character quality, and, in other image areas, to obtain an excellent color image without bleeding between black and other colors, thereby attaining black recording of high quality and color recording of high quality in compatible manner, and also to enable compactization of the apparatus.

An embodiment of the present invention provides a color image forming method that resolves the drawbacks in the conventional recording methods and enables effective utilization of a conventional recording method by discharging an ink droplet through film boiling induced by thermal energy or other record improving technologies, and a recording apparatus utilizing such color image forming method.

BRIEF DESCRIPTION OF THE DRAWINGS

Fig. 1 is a schematic view for explaining the principle of the present invention;
Fig. 2 is a schematic view for explaining the principle of correction of a boundary area in the present invention;
Fig. 3 is a schematic view of a boundary area in which a cyan (C) pixel and a magenta (M) and yellow (Y) superposed pixel are alternately arranged;
Fig. 4 is a view showing other examples of the alternately arranged pattern in the boundary area;
Fig. 5 is a schematic view in which a boundary area of five pixels are represented by a C, M, Y superposed pattern;
Fig. 6 is a perspective view of an ink jet recording apparatus in which the present invention is applicable;
Figs. 7A and 7B are views showing a head mechanism for the ink jet recording apparatus in which the present invention is applicable;
Fig. 8 is a block diagram of a control circuit of the ink jet recording apparatus in which the present invention is applicable;
Figs. 9A and 9B are flow charts of the control sequence of a second embodiment;

Figs. 10A and 10B are flow charts of the control sequence of a third embodiment;

Fig. 11 is comprised of Figs. 11A and 11B showing flow charts of the control sequence of a fourth embodiment;

Figs. 12A to 12C are views showing the results of printing in the second, third and fourth embodiments;

Figs. 13A and 13B are views showing the contents of the buffer before and after the processing in the second embodiment;

Figs. 14A and 14B are views showing the contents of the buffer before and after the processing in the third embodiment;

Figs. 15A and 15B are views showing the contents of the buffer before and after the processing in the fourth embodiment;

Fig. 16 is a view showing an example of the font data in the fourth embodiment;

Fig. 17 is a view showing the result of printing in a fifth embodiment;

Figs. 18A and 18B are views showing the contents of the buffer before and after the processing in the fifth embodiment;

Fig. 19 is comprised of Figs. 19A and 19B showing flow charts of the control sequence of the fifth embodiment;

Figs. 20A to 20C are views showing an example of the image for explaining the present invention;

Fig. 21 is a flow chart showing the function of the embodiments;

Fig. 22 is a flow chart showing another function of the embodiments;

Fig. 23A is a perspective view showing another ink jet recording apparatus in which the present invention is applicable;

Fig. 23B is a view of a recording head;

Fig. 24 is a table showing blotting rates of the embodiments;

Fig. 25 is a table showing fixing times of the embodiments; and

Fig. 26 is a table showing results of evaluation of the embodiments.

## DETAILED DESCRIPTION OF THE PREFERRED EMBODIMENTS

Now the present invention will be clarified in greater detail by preferred embodiments thereof, with reference to the attached drawings.

At first there will be explained the outline of the embodiments.

The present invention is to provide a color image forming method with liquids, which is featured by the use of a black liquid of relatively superior diffusibility and color liquids of different colors from that of said black liquid, with relatively superior penetrability, in order to form a black image with a high density thereby achieving a high contrast, while maintaining a color image in a relatively sharp state.

The superior diffusibility means that the ink has a relatively low penetration speed, thereby staying on the paper surface, and diffuses uniformly without being too much affected by the surface irregularities of the paper, in order to attain a high density in the black image area on the recording paper, and to realize high image quality without feathering. On the other hand, the superior penetrability means that the ink has a relatively high penetration speed into the recording paper, in order to prevent blotting between different colors. As the density tends to become somewhat lower, it may be compensated for example by a corresponding increase in the dye concentration. The relative difference in these properties enables to utilize the superior points of respective colors, thereby optimizing the entire color balance.

A similar effect as explained above can also be attained by the use of a black liquid of relatively superior surface active property (more specifically a larger surface tension) and color liquids different in color from said black liquid and with relatively inferior surface active property (more specifically a small surface tension). More specifically, it has been found that acetylenol (acetylene glycol-EO adduct made by Kawaken Fine Chemical K.K.), which has not been considered in the prior art, is best for reducing the surface tension, and that color inks containing acetylenol, or a fluorine-containing surfactant or another known surfactant in an amount from 0.5 to 15 wt.% (preferably from 1 to 3 wt.%) shows relatively lowered surface active property thereby showing increased penetrability and exhibiting satisfactory characteristics in colors other than black, and can provide an appropriate balance with a high density image formed with a black ink not containing such surfactant or containing it in a relatively smaller amount (preferably less than 1 wt.%). In physical terms, a preferred condition is that the surface tension of the ink, provided by the surface active property etc., is equal to or smaller than the critical surface tension of the paper.

In a more preferable condition, the recording with self-restraining effect of mutual diffusion can be attained, with improved image fixability, by the use, either singly or in combination, of a black liquid containing urea and showing relatively superior diffusibility and color liquids showing colors different from that of said black liquid, containing urea in an amount from 1 to 15 wt.% and also containing a surfactant such as acetylenol in a relatively larger amount thereby showing superior penetrability.

On the other hand, it has become possible to compare the difference in the total characteristics of liquid, including the diffusibility or penetrability thereof, by defining the amount of light reflection on the liquid surface, and it has been found that a desired difference in the property of respective color images can be securely achieved by a difference in the above-mentioned characteristics of at least 100 msec, preferably at least 200 msec, and most preferably at least 500 msec. Said preferred difference corresponds to a difference of about 10 times in the penetration time, thereby enhancing the high density of the black image and the sharpness of the color image. Ideally there is provided a color image forming method with liquids, which is featured by the use of a first color liquid of which penetration time, defined by the penetration time from the deposition on the recording medium to the abrupt change in the amount of surface reflected light is in the order of several tens to several hundred milliseconds (preferably 100 msec), and a second color liquid of a luminocity lower than that of said first color liquid and a penetration time in the order of a second.

Also the following embodiment resolves the penetration of solvent constituting the liquid at the image boundary area, or the unexpected dispersion of dye or pigment (for example blotting between different colors), resulting from the respective improvements in the characteristics of different colors. This is achieved by forming a barrier for preventing the dispersion, or by forming an error dispersion area, limiting the dispersion within a visual error area. Thus, there is provided a color image forming method with liquids, which is featured by the use of a black liquid with relatively superior surface active property, and plural color liquids different in color from said black liquid and having relatively inferior surface active property, wherein a black area positioned between said black liquid and said color liquids is formed by said plural color liquids. There is also provided a color image forming method, in which said black boundary area is formed by said plural color liquids, to which a small amount of black liquid is added within an extent not deteriorating the function of the dispersion preventing barrier, thereby improving the level of black color. In this manner it is rendered possible to prevent the image aberration in the boundary area, and to enhance the desired characteristics provided to respective liquids. The addition of the black liquid in said black boundary area is preferable, since it attains an increased density in the boundary area.

Such recording can be achieved, for example, by a color image recording apparatus comprising liquid jet recording means for discharging liquids of different colors onto a recording medium, and means for supplying said recording means with a recording signal, wherein said recording signal supplying means is adapted to supply said recording means with a signal for discharging only a black liquid of relatively superior diffusibility in a character area of black color only, or a signal for discharging a color liquid having a color different from that of said black liquid and also having relatively superior penetrability in an isolated color area of a color different from that of siad black liquid, or a signal discharging at least plural color liquids of different colors in a black image area between the area of said black liquid and the area of said color liquid. Such apparatus can provide an image of a high density, while providing a character principally composed of black color.

More preferably, there are added the aforementioned conditions of relative surface active property. Besides there can be provided a practical color image forming method with improved image fixing ability, which is featured by the use of a black liquid containing urea and showing relatively superior diffusibility and color liquids, different in color from said black liquid, containing urea and acetylenol and showing relatively superior penetrability. Acetylenol is contained in the color liquid in an amount of at least 0.5 wt.%, preferably at least 3 wt.%. Also preferred is the combination with the above-mentioned conditions.

In the foregoing embodiments, the boundary area is strictly defined, but, in the ink jet recording apparatus, there may occur ink discharge errors in local areas. It is also a preferred configuration to avoid influence on the image even in the presence of such error in the ink discharge. For this reason, there can be achieved practical and safe image formation, by forming, at least in a part of the boundary area of an image area to be formed with the black liquid only, an area with a color liquid different in color from said black liquid.

In a recording apparatus employing ink jet recording means provided with plural color ink discharging units arranged with a certain pitch along the scanning direction, in which the printing interval of the adjacent ink discharging units is in the order of 10 msec, it is also effective to provide a particularly practical configuration. Such configuration preferably satisfies the following conditions, in order to maintain the proper mixed state of plural color inks in the boundary area, until proper fixation of the images of respective colors. For this purpose there is provided a recording apparatus employing a first color liquid of which penetration time from the deposition onto the recording medium to the abrupt change in the amount of surface reflected light is in the order of several tens to several hundred milliseconds, preferably about 100 msec, and a second color liquid of a luminocity lower than that of said first color liquid and of said penetration time in the order of a second, for forming deposition areas, and comprising means for forming, in at least a part of the boundary of a deposition area to be formed with a black liquid, a deposition area with a color liquid only, different in color from said black liquid. The above-mentioned difference in the penetration time additionally enhance the effect of the present invention mentioned above.

The above-mentioned means for forming the boundary area is also effective in a recording apparatus employing ink jet recording means provided with plural color ink discharge units arranged at a certain pitch along a direction different from the scanning direction, in which the printing interval of the adjacent ink discharging units is in the order of a second, whereby the printing interval is made closer to the penetration time of the second color liquid in order to reduce the blotting of the first and second color liquids. Furthermore the present invention is effective in a recording apparatus

6

in which the printing interval is sufficiently larger than the penetration time of the second color liquid of the slower penetration, since the blotting in the boundary area may take place if the ink drying is insufficient.

[Embodiment 1]

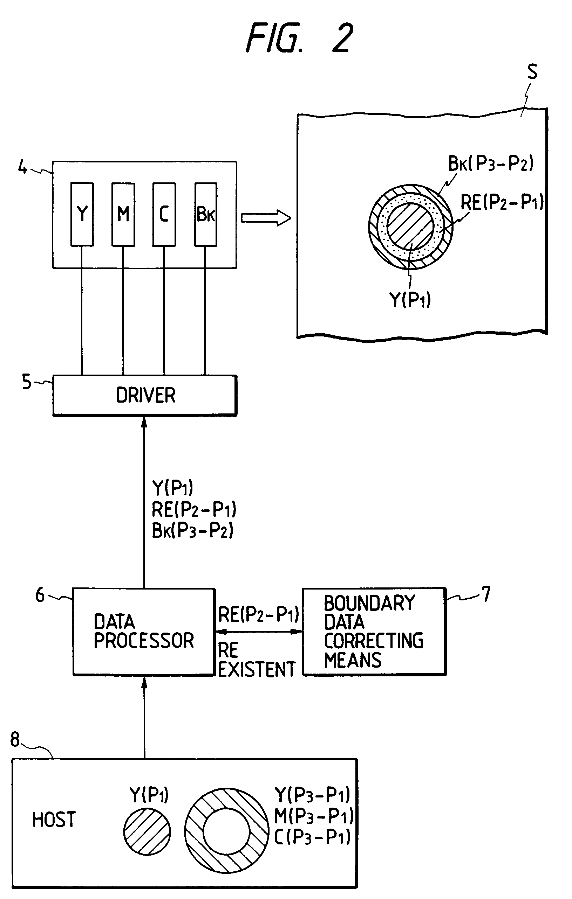

Fig. 2 illustrates an embodiment of the present invention, applied to a serial ink jet recording apparatus. A carriage (not shown) supports a color recording head 4 of four colors of cyan (C), magenta (M), yellow (Y) and black (Bk), and is movably supported by a known guide shaft. The carriage is moved, by a driving motor such as a stepping motor driven by a motor driver, along the recording surface of a recording sheet S, such as paper. A transport roller for advancing the recording sheet S, guide rollers for guiding said sheet S, a sheet transport motor etc. are also provided though they are not illustrated.

The recording heads 4 are respectively provided with liquid paths for discharging ink droplets toward the recording sheet S, ink tanks respectively corresponding to the recording heads 4Y, 4M, 4C, 4Bk, discharge energy generating means (preferably electrothermal converters for inducing film boiling by thermal energy) provided in said liquid paths etc. and are selectively given ink discharge signals through the head drivers 5.

Table 1 shows the specific compositions of inks, constituting a feature of the present embodiment.

## Table 1

Bk ink

| | |
|---|---|
| Water | 82 wt.% |
| Black dye | 3 wt.% |
| Glycerine | 5 wt.% |
| Urea | 5 wt.% |
| Thiodiglycol | 5 wt.% |

C ink

| | |
|---|---|
| Water | 77 wt.% |
| Cyan dye | 3 wt.% |
| Glycerine | 5 wt.% |
| Urea | 5 wt.% |
| Thiodiglycol | 5 wt.% |
| Acetylenol | 5 wt.% |

M ink

| | |
|---|---|
| Water | 77 wt.% |
| Magenta dye | 3 wt.% |

| | |
|---|---|
| Glycerine | 5 wt.% |
| Urea | 5 wt.% |
| Thiodiglycol | 5 wt.% |
| Acetylenol | 5 wt.% |

Y ink

| | |
|---|---|
| Water | 78 wt.% |
| Yellow dye | 2 wt.% |
| Glycerine | 5 wt.% |
| Urea | 5 wt.% |
| Thiodiglycol | 5 wt.% |
| Acetylenol | 5 wt.% |

The Bk ink achieves satisfactory diffusibility on the recording sheet, and does not show feathering. On the other hand, other color inks contain acetylenol as surfactant in an amount of 5 wt.% for achieving superior penetrability and preventing blotting between different colors. The penetration time into the recording paper is not simply determined by the surface tension of the ink, but is considerably influenced thereby. Referring to Table 1, the surface tension is 50 dyne/cm$^2$ for the Bk ink and 28 dyne/cm$^2$ for color inks. In this manner the surface tension is designed considerably higher in the Bk ink than in the color inks. In the present embodiment, for an ink droplet of 80 ng/drop, the penetration time measured by the aforementioned amount of surface reflected light is about 5 sec. for the Bk ink and about 80 msec., though these values are dependent on the recording paper to be used.

In the following there will be explained the correction of the boundary area, which is one of features of the present embodiment.

Data processor 6 including a CPU is provided with means 7 for correcting the boundary data as explained before, and said means automatically modifies the data of the boundary area RE for driving a driver 5, according to the input information from a host equipment 8.

The detection of the boundary area in the present embodiment is conducted by the data processing in the recording apparatus, but the data processing including the data correction of the boundary area RE may be conducted by a software for controlling the recording apparatus, in the host equipment 8 and the recording apparatus may receive thus processed data. Also the data transferred from the host equipment 8 can be in the form of Y, M, C and Bk data or R, G and B data instead of Y, M and C data.

The data processing for correcting the boundary area RE consists of at first discriminating whether a color image is present adjacent to a black image, and determining whether to form the black image with the black ink alone or to form the boundary area with plural color inks, according to the result of said discrimination. In the present embodiment, in which the boundary data correction is conducted in the main body of the recording apparatus, the data transferred from the host equipment are stored in a buffer, then the black data are compared with other color data to detect the boundary.

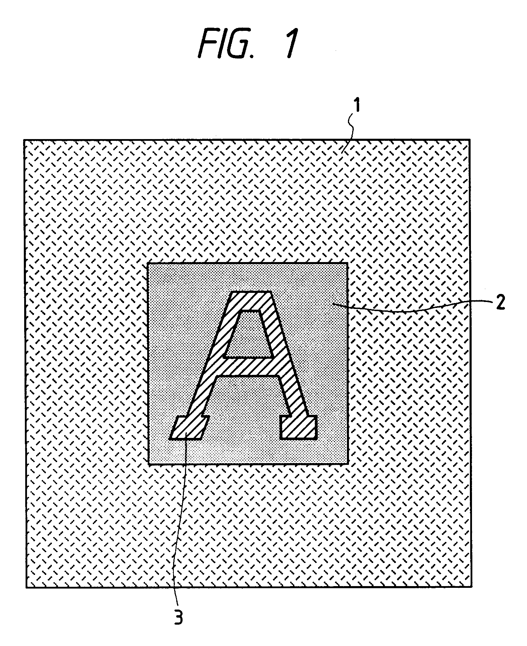

Fig. 1 is a schematic view showing the principle of the present embodiment.

In Fig. 1 there are shown a 100% solid yellow area 1, a 100% solid black area 2, and a white paper area 3. Thus a white character "A" of which contour is black is printed on a yellow background.

The CPU 6 of the recording apparatus checks the black data on the buffer, from the upper left corner of the image. The black data are detected for the first time when the checking procedure proceeds to the area 2. At a point where the presence of black data is detected, there is discriminated whether an adjacent color image is present. In this example the yellow data of the area 1 is detected, so that a boundary with another color is identified, and the boundary data correction is identified necessary.

On the other hand, when the check procedure proceeds to the white character "A", there is again detected the boundary of the black image, but the boundary data correction is identified unnecessary, since an adjacent another color image is not detected at this point. Thus, in this example, the boundary data correction is conducted on the external four sides of the area 2, but the boundary of the area 2 with the white character is recorded with the black ink only, without the boundary data correction. If the external four sides of the area 2, adjacent to the yellow image area 1, are recorded with the black ink only without the boundary data correction, the boundary becomes very unclear because of the blotting when the plain paper is used as the recording medium, whereby the image quality is significantly deteriorated.

In the following there will be epxlained the sequence of correction of the image data, with reference to Fig. 2. Data corresponding to a black image of an area P3 - P1 and data corresponding to a yellow image of an area P1 are transferred from the host equipment 8 to the data processing unit of the recording apparatus. In this example, the data of the black image are transferred in the form of superposed data of three colors Y, M, C, and the data processing unit 6 replaces the three-color superposed portion with Bk data and stores said data in the buffer, in addition to the transferred Y, M and C data.

Then the Bk data are checked as explained above to detect the black data boundary RE. Upon completion of the check for the Bk data on the buffer, the boundary data correction means 7 effects the boundary data correction. In this embodiment, the boundary data correction deletes a corrected portion RE (P2 - P1) of a predetermined boundary width from the black data, and said portion RE is added, according to a predetermined process color pattern (PCP) to the Y, M, C data in the buffer.

As a result, the actual recording signals given from the driver 5 to the recording heads 4 consist of a yellow area P1, an area (P2 - P1) recorded with plural colors according to said PCP, and a black area (P3 - P2). On the recording paper S, there are recorded, in concentric circles, a yellow area, a corrected black color area recorded with plural colors, and an external black area.

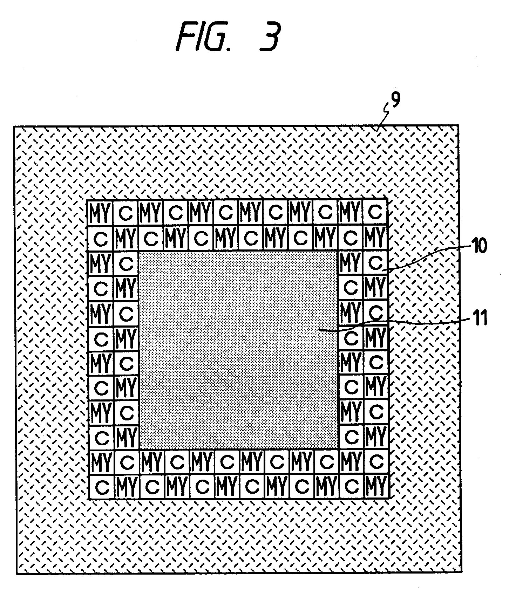

Fig. 3 is a schematic view in which the boundary area of a width of two pixels is formed by a process color pattern (PCP) consisting of an alternate arrangement of a cyan pixel and a magenta/yellow superposed pixel. For the ease of representation, the shape of the image area is represented by squares, instead of circles.

In Fig. 3 there are shown a 100% solid yellow area 9, a corrected black area 10 after the boundary data correction, and a black image area 11 recorded by the black ink only. The original black image corresponds to the areas 10 and 11. In this example of boundary data correction, the boundary area of a width of two pixels is recorded with plural colors according to said process color pattern. In this example, ink blotting occurs at the boundary between the area 10 recorded with the Bk ink of superior diffusibility and the area 11 recorded with the C, M and Y inks superior in the penetrability, but such blotting does not cause any problem on the image, since these areas are to be recorded with a same color.

On the other hand, at the boundary between the area 10 recorded with plural inks of superior penetrability and the area 9 recorded with the yellow ink with superior penetrability, there is not induced blotting of an extent deteriorating the image quality even between colors, because both image areas are recorded with inks of superior penetrability. Thus there is obtained an image of high quality, with a high black density in the area 11 and without blotting at the boundary of different colors in the areas 9, 10.

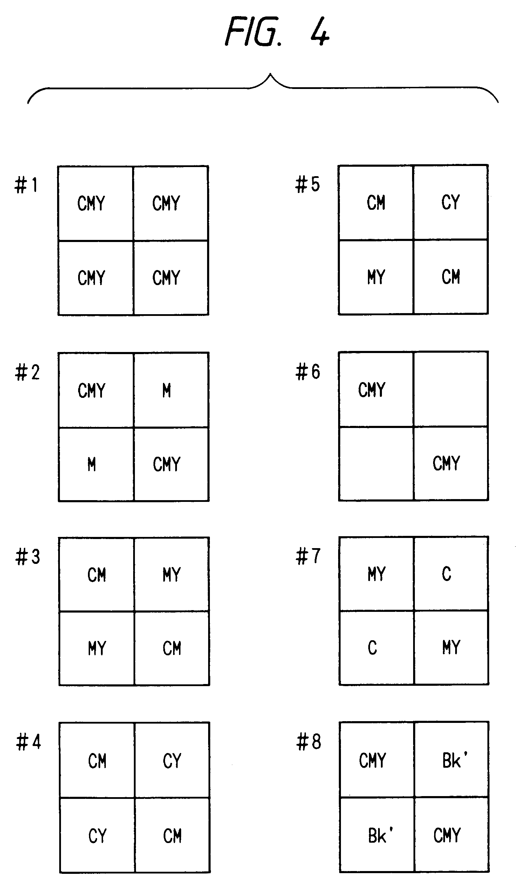

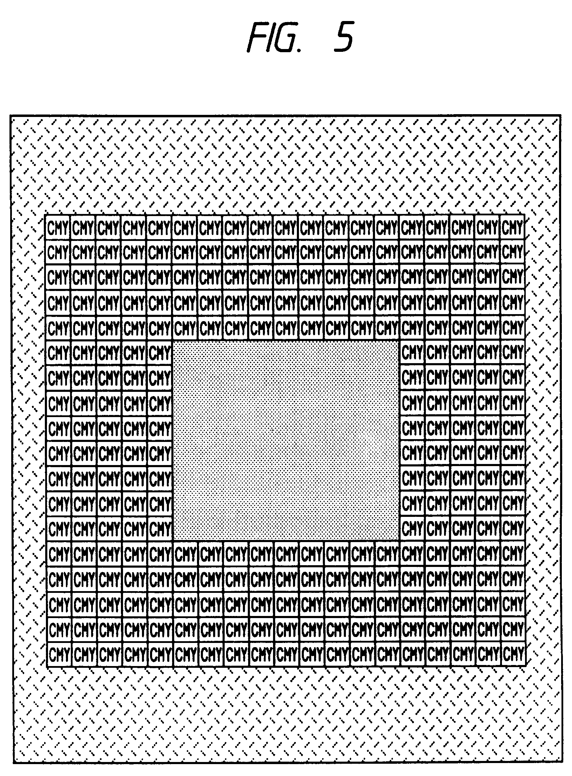

Fig. 4 shows other examples (#1 - #8) of the alternately arranged pattern (process color pattern) in the boundary area. The above-explained example of boundary data correction corresponds to the pattern #7 shown in Fig. 4, in which the C pixel and M-Y pixel are alternately arranged in the boundary area of a width of two pixels. Also Fig. 5 shows an example in which the boundary area of a width of five pixels is represented by C, M, Y superposed pixels, corresponding to the example #1 in Fig. 4. The alternately arranged pattern in Fig. 4 and/or the width of the boundary area may be selected by the user according to the kind of the recording medium, the preference of the user for the level of black color, the image data, the recording speed or the recording mode such as a black enhancing mode, or may be automatically selected. Also they may be selected for each model of the recording apparatus, according to the recording density, the kind of ink and the discharge amount thereof.

Referring to Fig. 4, the pattern #1 provides a high density but should be used in a recording medium with a relatively high ink absorbing capacity, because it deposits a large amount of ink. The patterns #2 to #5 may be suitably selected according to the difference in color development depending on the recording medium, and also according to the taste of the user. The patterns #6 and #7 are designed to reduce the ink deposition amount, and are suitable for a recording medium of a relatively low ink absorbing capacity, a high recording density, or a recording mode or image data in which a somewhat low density is not conspicuous. Then, in contrast to the patterns #1 - #7 in which the boundary area is recorded with the C, M and Y inks of superior penetrability only, the pattern #8 utilizes the Bk ink of inferior penetrability in addition to the C, M, Y inks of superior penetrability, thus easily causing blotting but providing a corrected black color close to the real black color. This pattern can therefore be selected according to the absorbing property of the recording paper, in consideration of the balance of blotting with the black ink.

Also at the boundary between the C, M, Y inks of increased penetrability and the Bk ink of superior diffusibility, there may result, in addition to the blotting of the image, a blotting of the penetrability enhancing agent, thus forming a whitish portion in the black image area. Such formation of whitish portion can be suppressed by adding the Bk ink, not containing such penetrability enhancing agent, in the boundary area as in the pattern #8, in order to reduce the unevenness in the distribution of concentration of said penetrability enhancing agent.

Also since said pattern provides a corrected black color close to the real black color, there may be selected, depending on the kind of the recording paper, a recording mode in which all the black data are recorded with such corrected black color, for the purpose of simplifying the data processing and increasing the recording speed.

The example shown in Fig. 5, having an increased width of the boundary area to be recorded with said process color pattern, enables the use of a black ink with a high concentration and with reduced feathering phenomenon. However, if the pixel density is low, the boundary area recorded with the corrected black color which is somewhat different from the real black color becomes wider and may become noticeable. Consequently the width of such boundary area should be determined in consideration of the blotting and the color of such corrected black color. Also said width may be determined in consideration of the errors in the ink discharge, as explained before. Furthermore, the amount of ink discharge may be varied for each color, according to the selection of the processed color pattern, for correcting the color difference or regulating the ink deposition amount.

Table 2 shows the compositions of another preferred example of the inks, in which the black ink is given somewhat higher penetrability for suppressing the blotting, in comparison with those shown in Table 1.

<u>Table 2</u>

Bk ink

| | |
|---|---|
| Water | 82.9 wt.% |
| Black dye | 3.5 wt.% |
| Triethylene glycol | 5.0 wt.% |
| Hexanetriol | 7.0 wt.% |
| Isopropyl alcohol | 1.5 wt.% |

| | |
|---|---|
| Acetylenol | 0.1 wt.% |

C ink

| | |
|---|---|
| Water | 83.0 wt.% |
| Cyan dye | 2.5 wt.% |
| Triethylene glycol | 5.0 wt.% |
| Hexanetriol | 7.0 wt.% |
| Isopropyl alcohol | 1.5 wt.% |
| Acetylenol | 1.0 wt.% |

M ink

| | |
|---|---|
| Water | 83.0 wt.% |
| Magenta dye | 2.5 wt.% |
| Triethylene glycol | 5.0 wt.% |
| Hexanetriol | 7.0 wt.% |
| Isopropyl alcohol | 1.5 wt.% |
| Acetylenol | 1.0 wt.% |

Y ink

| | |
|---|---|
| Water | 82.5 wt.% |
| Yellow dye | 1.5 wt.% |
| Triethylene glycol | 5.0 wt.% |
| Hexanetriol | 7.0 wt.% |
| Isopropyl alcohol | 2.5 wt.% |
| Acetylenol | 1.5 wt.% |

Also Table 3 shows the compositions of another preferred example of the inks, in which C, M and Y inks contain cyclohexanol as penetrability improvement agent which does not deteriorate the discharge properties such as fixing property, instead of acetylenol as penetrability enhancing agent in the foregoing example.

Table 3

Bk ink

| | |
|---|---|
| Water | 71.0 wt.% |
| Black dye | 4.0 wt.% |
| Diethylene glycol | 20.0 wt.% |
| Urea | 5.0 wt.% |
| Cyclohexanol | 0.0 wt.% |

C ink

| | |
|---|---|
| Water | 68.5 wt.% |
| Cyan dye | 3.5 wt.% |
| Diethylene glycol | 20.0 wt.% |
| Urea | 5.0 wt.% |
| Cyclohexanol | 3.0 wt.% |

M ink

| | |
|---|---|
| Water | 68.5 wt.% |
| Magenta dye | 3.5 wt.% |
| Diethylene glycol | 20.0 wt.% |
| Urea | 5.0 wt.% |
| Cyclohexanol | 3.0 wt.% |

Y ink

| | |
|---|---|
| Water | 69.5 wt.% |
| Yellow dye | 2.5 wt.% |
| Diethylene glycol | 20.0 wt.% |
| Urea | 5.0 wt.% |
| Cyclohexanol | 3.0 wt.% |

Also in the above-mentioned two examples of inks, the Bk ink achieves satisfactory diffusibility on the recording paper, without feathering, thereby enabling recording of high quality with a high density. On the other hand, other color inks contain acetylenol or cyclohexanol as the penetrability providing agent, for achieving excellent penetrability and preventing ink blotting between different colors. The surface tension of the above-mentioned inks is 35 dyne/cm$^2$ or higher for the Bk ink, and 32 dyne/cm$^2$ or lower for other color inks. Thus the surface tension is selected higher in the Bk ink than in the color inks, also in consideration of the viscosity. Also in either example, for an ink droplet of 80 ng/drop, desired image characteristics can be attained by regulating the penetration time, measured in the aforementioned manner by the amount of surface reflected light, at least 10 times larger for the Bk ink than for other color inks, though said penetration time may vary depending on the recording paper.

Following cases were investigated as reference examples. When the Bk ink contained the penetration enhancing agent in a comparable amount as in other color inks, the blotting was suppressed but the character quality was significantly deteriorated in certain cases. On the other hand, a reduction of the amount of the penetration enhancing agent in other color inks increased the image density, but the ink blotting at the boundary became severer even when the present invention was applied. The excellent effect of the present invention can also be confirmed from these reference examples.

The present embodiment can form the desired image in a more appropriate state, positively utilizing the difference in the characteristics of the liquids, in a manner unexpected in the prior art. Also the correction of the boundary area provides an advantage of forming an excellent image even when the difference in the characteristics of the liquids is more enhanced, and is at least capable of an image significantly superior to the image obtained in the prior art.

[Embodiment 2]

At first there will be explained the outline of a second embodiment.

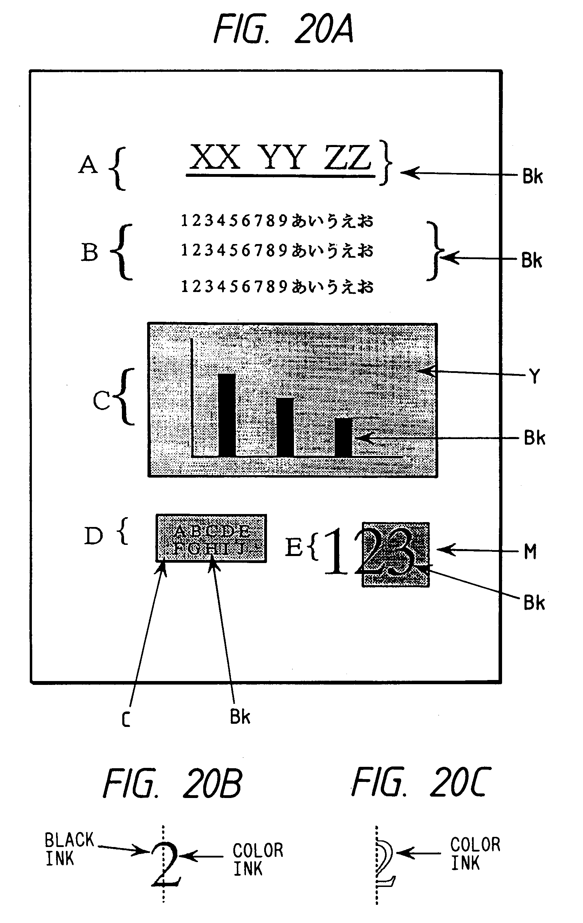

Fig. 20A illustrates an image containing black images and color images in mixed manner. An image-portion A consists of black characters X, Y and Z and an underline, and is represented by bit image data. An image portion B consists of code data for black characters. An image portion C consists of black graphic patterns on a yellow background, and is represented by bit image data. An image portion D consists of black character code data on a cyan background. An image portion E consists of black image data, with a partial magenta background image.

The image portion A, consisting of bit image data, is stored in the buffers for the yellow, magenta and cyan color inks. However, as the data of the buffers for the different colors are mutually equal, the image portion A is printed by the black ink recording head. In this operation, the data stored in the color ink buffers are transferred into the black ink buffer, in which the recording signal to be supplied to the black ink recording head is stored.

The image portion B, consisting of the black character code data, is printed by the black ink recording head. The image portion C contains black graphic patterns on a yellow background image. Since the black images are completely surrounded by the yellow image, the black patterns are printed with the color inks, namely the yellow, magenta-and cyan inks. Since this image consists of bit image data, the data of the black graphic patterns are stored in the buffers for the yellow, magenta and cyan inks. As the data stored in said buffers are mutually different because of the presence of the background yellow image, the black graphic patterns are formed with the yellow, magenta and cyan inks, utilizing the data stored in the buffers of the respective colors.

In the image portion D, since the black character code data have a cyan background image, the black characters are printed with the color inks as in the image portion C. Said black characters, consisting of the character code data, are stored in the buffer for the black ink, but, because the yellow data are present in the same pixels as those in the print positions of the character code data and also in the adjacent pixels, the black characters are printed with the color inks.

In the image portion E, the magenta image is present in a part of the background of the black bit image data. Among those data, the numeral "1" is printed with the black ink recording head, as it does not have an adjacent color image. On the other hand, a numeral "3" is printed with the color ink recording heads, as it is completely surrounded by the magenta image. The numeral "2" is adjacent, in a part of the periphery thereof, to the magenta image. In this case, said numeral "2" may be printed with the black ink recording head or with the color ink recording heads, according to the characteristics of the inks to be employed, and also to the extent of the periphery thereof, adjacent to the color image.

Also in this case, it is also possible to print a part of the black image with the black ink recording head and to print the remainder with the color ink recording heads. More specifically, as shown in Fig. 20B, the left-hand portion and the right-hand portion of the broken line may be respectively printed with the black ink recording head and with the color ink recording heads. Otherwise, as shown in Fig. 20C, the boundary portion alone, adjacent to the color image, of the black image may be printed with the color recording heads while the remaining portion may be printed with the black ink recording head.

In the following there will be a more detailed explanation will be given on the present embodiment.

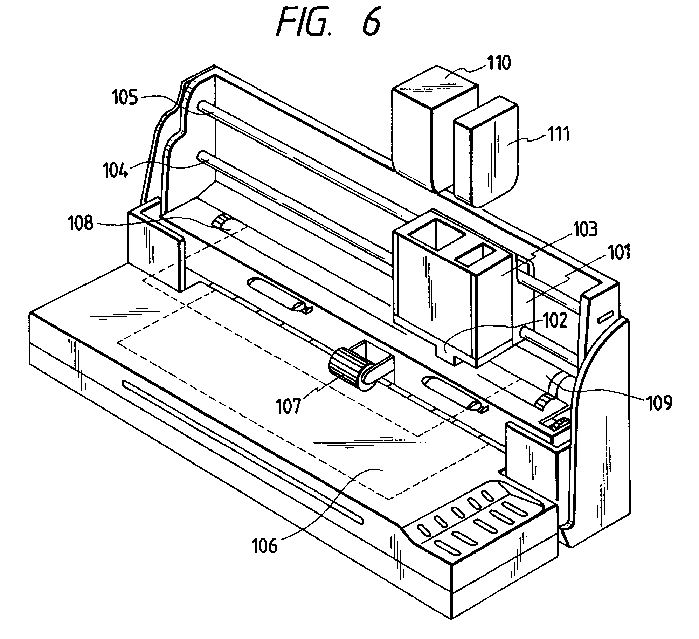

Fig. 6 is a perspective view of an ink jet recording apparatus equipped with a carriage and ink cartridges of the present embodiment. A carriage 101 supports a printing head 102 and a cartridge guide 103, and can effect a scanning motion along guide shafts 104, 105.

A recording paper 106 is fed by a feed roller 107 into the apparatus, pinched by a feed roller 108, a pinch roller (not shown) and a pressure plate 109, and is advanced onto a roller 102 for printing. There are provided a color ink cartridge 110 including yellow, magenta and cyan color inks, and a black ink cartridge 111, which are separately inserted into the cartridge guide 103, thereby communicating with the printing head 102.

The yellow, magenta and cyan inks contained in the color ink cartridge 110 have a high penetration speed into the recording paper, in order to prevent ink blotting at the boundary of different colors in the color image formation. On the other hand, the black ink contained in the black ink cartridge 111 has a lower penetration speed into the recording paper, in comparison with that of said three color inks, in order to obtain a high-quality black image of a high density, with reduced ink blotting.

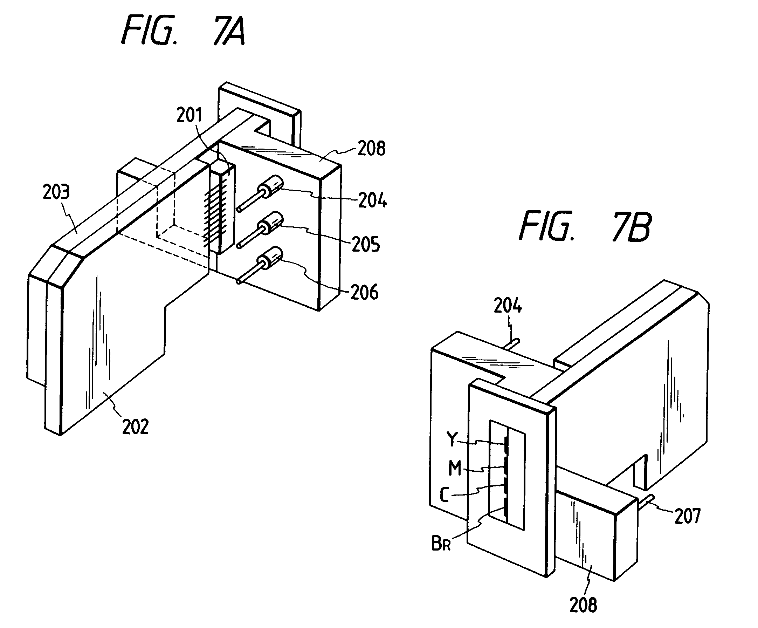

As shown in Figs. 7A and 7B, the recording head 102 is provided, on the front face thereof, with groups of ink discharge openings for the yellow, magenta, cyan and black inks, arranged linearly. Each group contains 24 openings for the yellow, magenta or cyan color, and 64 openings for the black color, and said groups are separated by gaps larger than the pitch of said ink discharge openings.

Said discharge openings respectively communicate with ink liquid paths, behind which provided is a common chamber for supplying said liquid paths with ink. In the liquid paths, respectively corresponding to the discharge openings, there are provided electrothermal converters for generating thermal energy utilized for ink droplet discharge and wirings for supplying said converters with electric power. Said electrothermal converters and wirings are formed by a film forming technology, on a substrate 201 for example of silicon. Said discharge openings, liquid paths and common liquid chamber are formed by laminating partitions of glass or resin and a ceiling board on said substrate. Behind these components, a driving circuit for driving said electrothermal converters according to the recording signals is provided in the form of a printed circuit board.

The silicon substrate 201 and the printed circuit board 202 are mounted on an aluminum plate 203. Pipes 204 - 207, protruding parallel to said aluminum plate 203 from a plastic member 208, called distributor and spreading perpendicularly to said silicon substrate, communicate with flow paths formed in said distributor, and said flow paths communicate with the common liquid chambers.

In said distributor there are provided four flow paths respectively for the yellow, magenta, cyan and black inks, which are respectively connected to the common liquid chambers.

Each of the discharge openings for the yellow, magenta and cyan inks provided in the printing head 102 discharges ink of about 40 ng, while each of the discharge openings for the black ink discharges ink of about 80 ng.

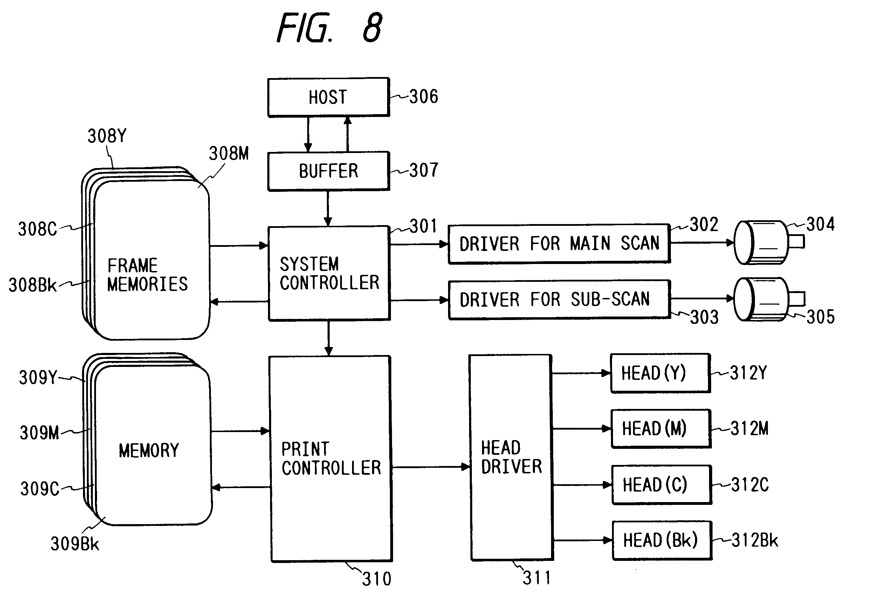

Fig. 8 is a block diagram of the control system of the color ink jet recording apparatus explained above.

A system controller 301, for controlling the entire apparatus, is provided therein with a microprocessor, a ROM storing control programs, a RAM utilized by said microprocessor in the program execution, etc.

There are also provided a driver 302 for driving the printing head in the main scanning direction; a driver 303 for driving the printing head in the sub scanning direction; and motors 304, 305 activated by the information on the speed and moving distance from the corresponding drivers.

A host computer 306 transfers the information to be printed to the recording apparatus of the present invention. A reception buffer 307 temporarily stores the data from said host computer, and retains said data until they are read by the system controller 301. A frame memory 308, for developing the data to be printed into image data, has a memory size required for the printing. In the present embodiment, said frame memory is assumed to be capable of storing data of a recording sheet, but the present invention is not limited by the size of the frame memory.

A memory device 309 temporarily stores the data to be printed, and its memory capacity varies according to the number of discharge openings of the printing head. A print control unit 310 controls the discharge speed, number of printed data etc. for controlling the printing head according to the instruction from the system controller 301. A driver 311, for controlling the heads 312Y, 312M, 312C, 312Bk, is controlled by the signal from said print control units 310.

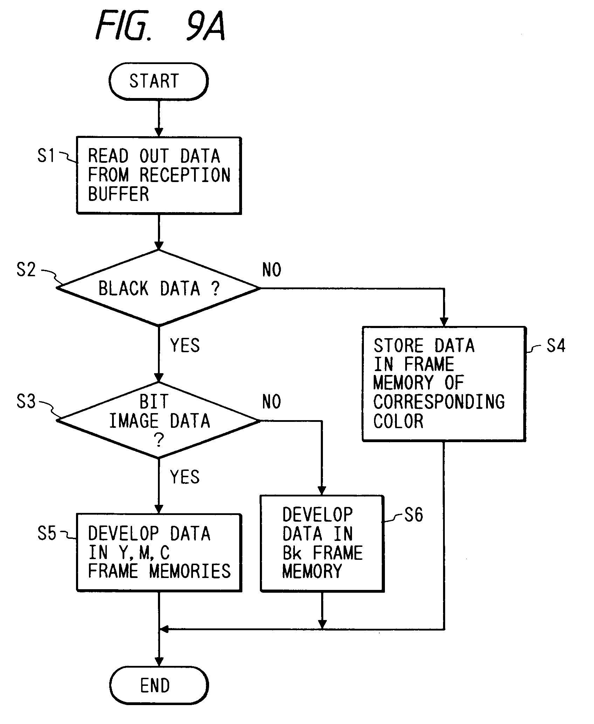

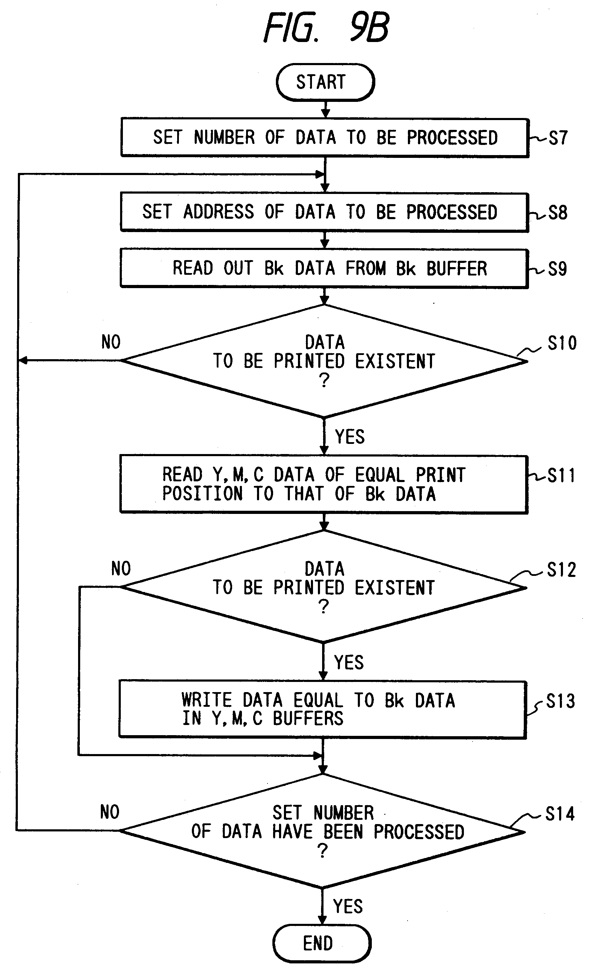

Figs. 9A and 9B show the control sequence of the present embodiment. A step S1 is the first step of processing of the data transferred from the host computer 306 shown in Fig. 8 to the reception buffer 307 by the system controller 101. This step reads thus stored data. A step S2 discriminates whether thus read data are those of a color other than black, and, in case of color data, a step S4 stores the data in the designated frame memory 308 shown in Fig. 8.

In case of black data, a step S3 discriminates whether said data are bit image data or character code data, and, in case of bit image data, a step S5 develops same data in the frame memories 308M, 308C, 308Y shown in Fig. 8, but, in case of character code data, a step S6 develops the data in the Bk frame memory.

A step S7 sets the number of the data processed, and a step S8 sets the address of the process. Then a step S9 reads the data from the Bk buffer, and a step S10 discriminates whether the data to be printed are present. If absent, the sequence proceeds to a step S14 for discriminating whether the processing of the predetermined data number has been completed, and, if not, the sequence returns to the step S8 for continuing the data processing. On the other hand, if the data to be printed are present, a step S11 reads the data of other colors (Y, M, C) in the same print position, then a step S12 discriminates whether thus read data contain data to be printed, and, if present, a step S13 writes the Bk data in the Y, M and C buffers. If such data to be printed are absent, the Bk data are left unchanged in the buffer.

A step S14 discriminates whether the processing of the predetermined data number has been completed, and the above-explained process is repeated until the processing is completed. The above-explained processing can be applied at least to a dot.

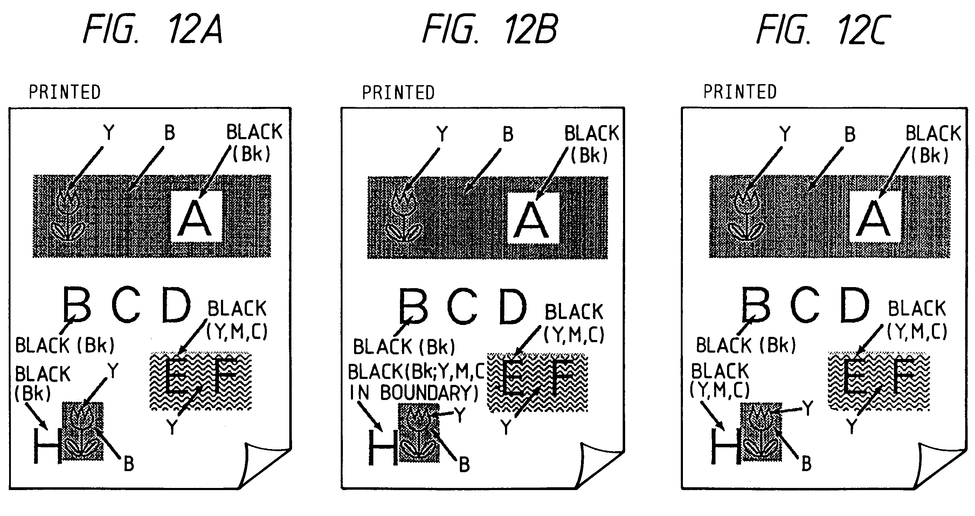

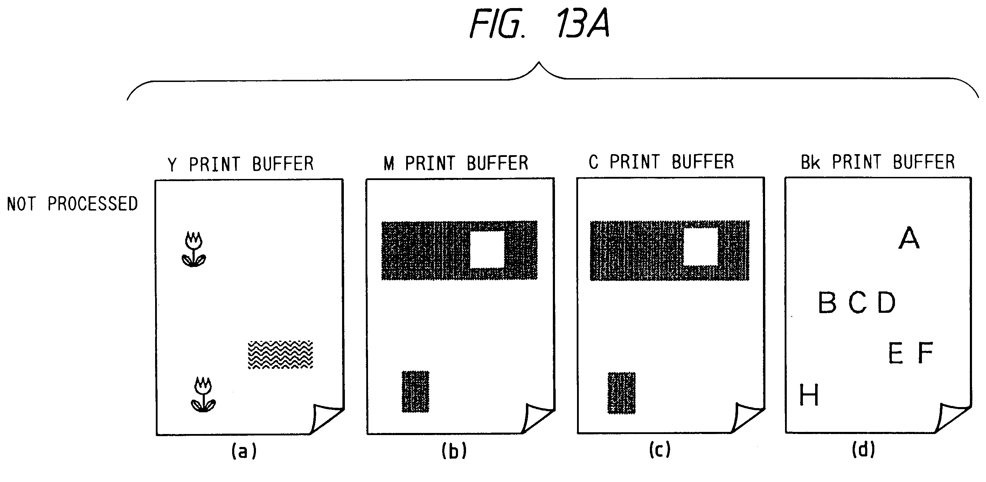

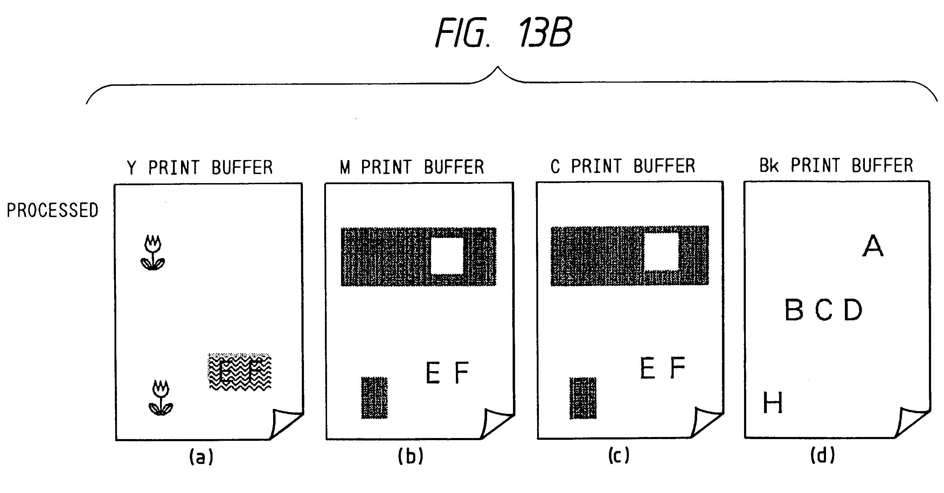

Now the present embodiment is explained with reference to Figs. 13A and 13B. The character code data are all developed in the Bk buffer, immediately after the development in the buffer ((a) to (d) in Fig. 13A). After the processing ((a) to (d) in Fig. 13B), the characters "EF" are developed in the Y, M and C buffers, so that the characters "EF" alone are printed with the Y, M and C colors as shown in Fig. 12A.

As explained in the foregoing, the Bk data present in the same print positions as those of the C, M or Y data are printed with the C, M and Y inks. Thus there can be alleviated the blotting between the black and other colors.

[Embodiment 3]

The 3rd embodiment constitutes an improvement over the 2nd embodiment.

In the 2nd embodiment, the development of the Bk data is judged by the color data in the same print positions as those of the Bk data, and the Bk data are developed in the Y, M and C buffers. On the other hand, in the 3rd embodiment, said development is judged by the data of at least an adjacent pixel, and the Bk data are developed in the Y, M and C buffers.

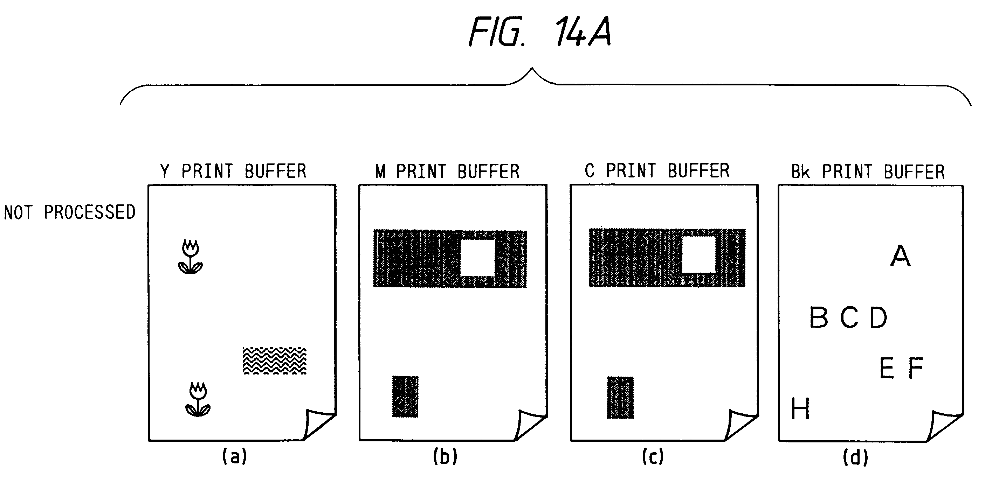

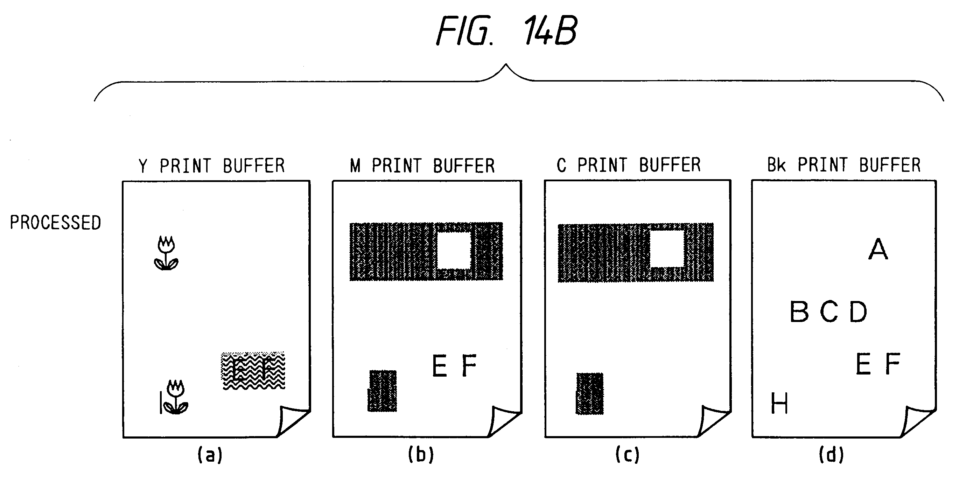

The present embodiment will be explained with reference to Figs. 14A and 14B. The character code data are all developed in the Bk buffer, immediately after the development in the buffers ((a) to (d) in Fig. 14A). After the processing ((a) to (d) in Fig. 14B), the data "EF" are developed in all the Y, M and C buffers, and, as shown in Fig. 12B, a dot adjacent to the bit image data of "EF" or "H" is printed with the Y, M and C inks. The remaining part of "H" is printed with the black ink.

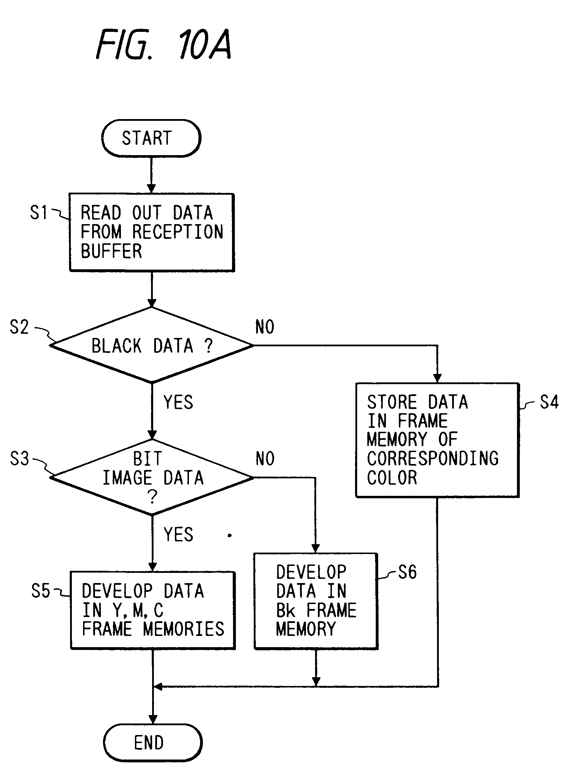

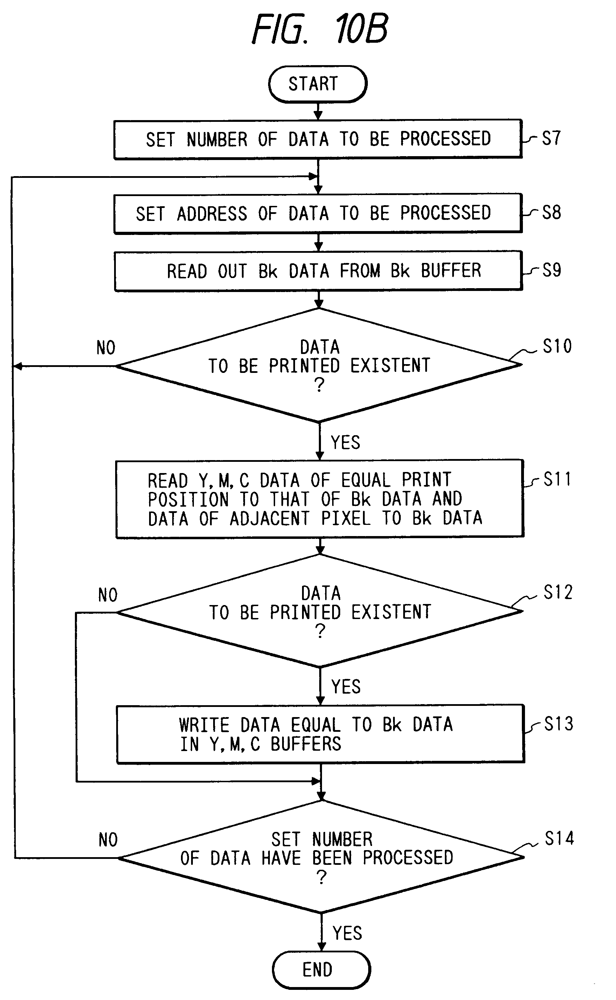

The sequence of the above-mentioned processing will be explained in detail, with reference to a flow chart shown in Figs. 10A and 10B.

Steps S1 to S10 are same as those of the 2nd embodiment shown in Figs. 9A and 9B. A step S11 reads the data of other colors (Y, M, C) in the same print positions and in the adjacent pixels, and discriminates whether data to be printed are present in these positions. If a step S12 identifies data even in a pixel in these positions, a step S13 writes the Bk data in the Y, M and C buffers. If such data are absent, the Bk data are left unchanged in the buffer.

A step S14 discriminates whether the processing of the predetermined data number has been completed, and the above-explained sequence is repeated until the predetermined processing is completed. The above-mentioned processing can be applied at least to a dot, to all the dots within an area recordable on the recording paper.

As explained above, the Bk data of which print positions are same as or adjacent to those of the C, M or Y data are printed with the C, M and Y inks. Consequently the blotting is alleviated not only where the black and another color are superposed but also where the black and another color are adjacent.

[Embodiment 4]

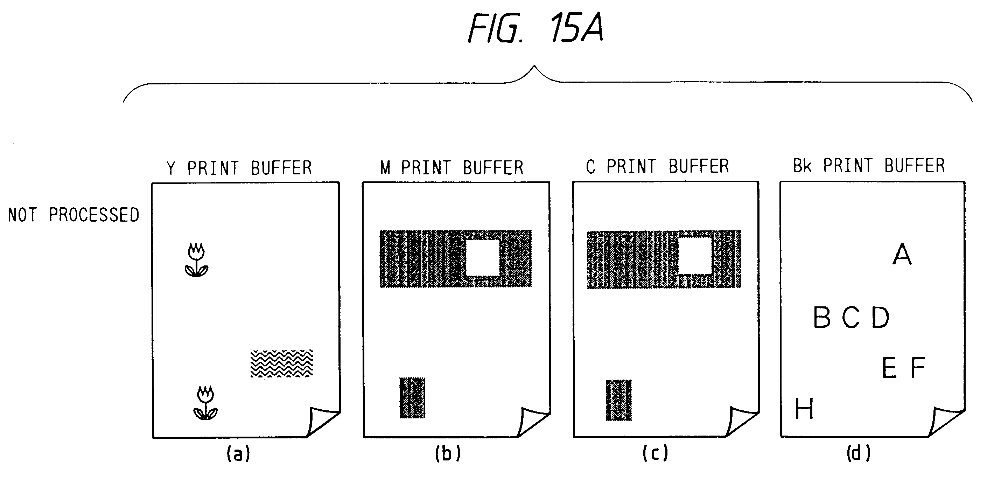

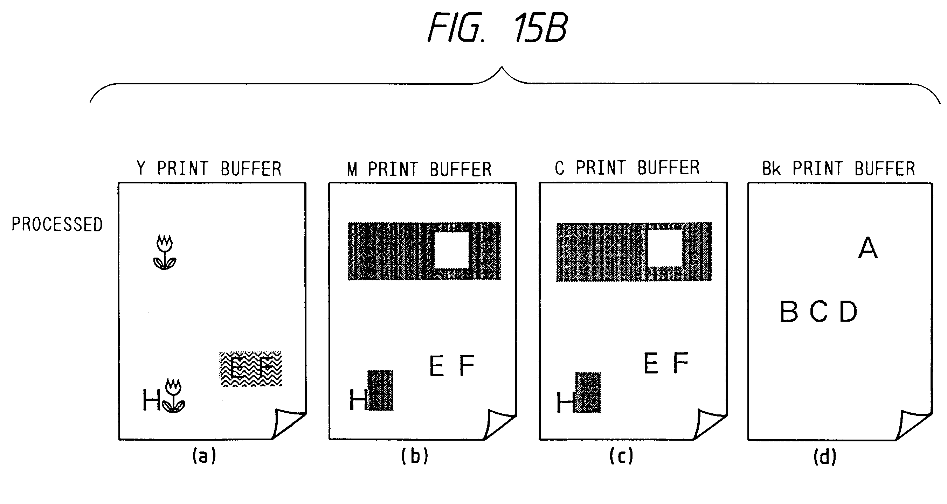

Figs. 15A and 15B illustrate the feature of the 4th embodiment.

(a) to (d) in Fig. 15A illustrate the results of development of the black character code data into the Bk buffer and the black bit image data into the Y, M and C buffers, as in the 2nd and 3rd embodiments.

After the processing, in the 3rd embodiment, an area of a width of one dot, at the right-hand side of the character "H", is developed into the Y, M and C buffers. In the present embodiment, as shown in (a) to (d) in Fig. 15B, the entire character "H" is developed into the Y, M and C buffers.

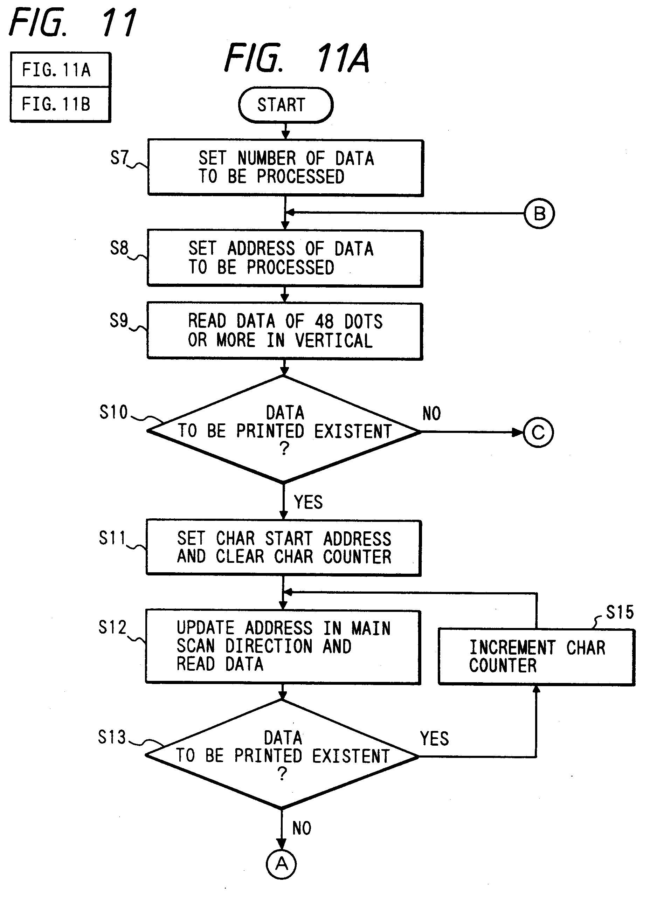

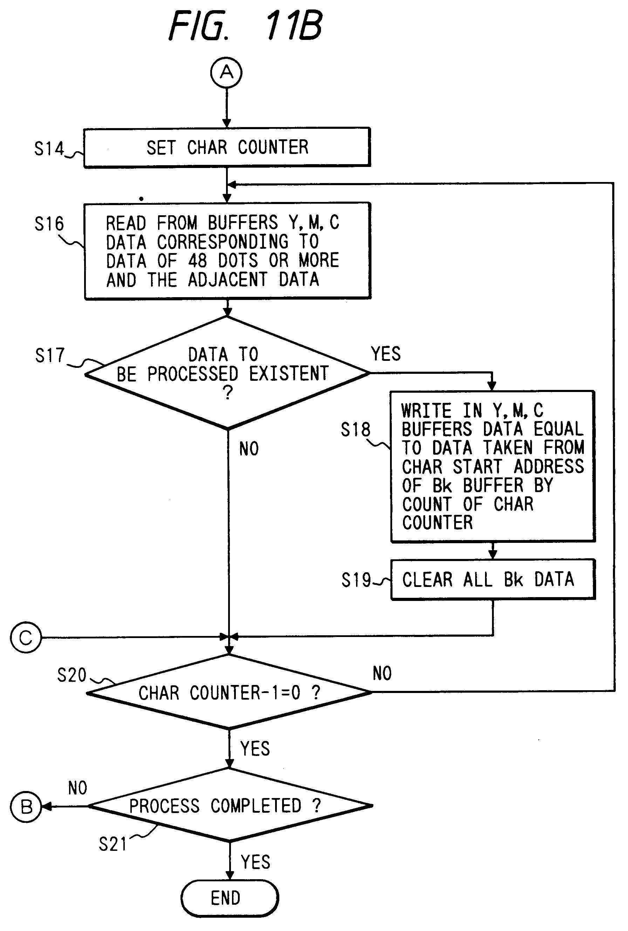

This sequence will be explained in detail by a flow chart shown in Figs. 11A and 11B.

Steps S1 to S8 are same as those in the 2nd and 3rd embodiments. In the foregoing two embodiments, the step S9 reads the data of at least a dot from the Bk buffer. In the present embodiment, for recognizing a character, this step S9 reads data of at least the vertical size of a character.

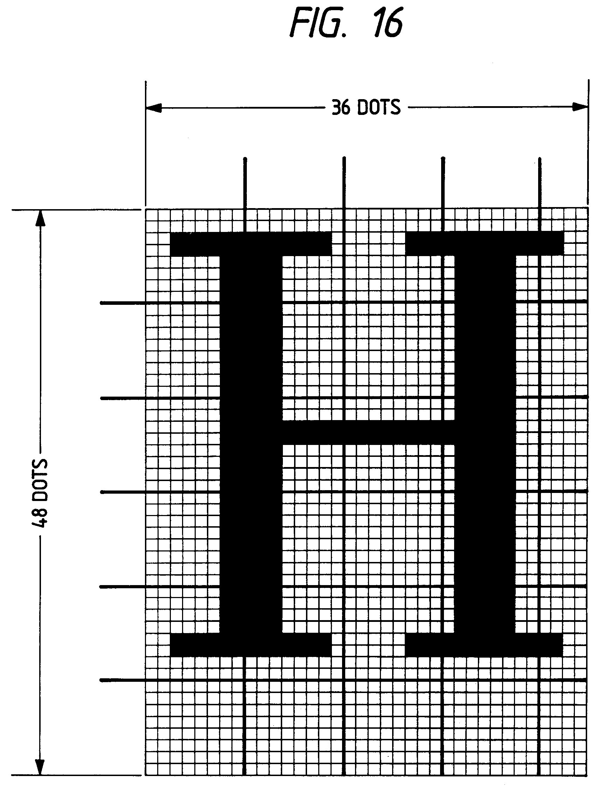

In case of a recording apparatus of a resolution of 360 dpi, the size of a character of a width of 10 cpi and a height of 10 point corresponds to 48 dots in the vertical direction as shown in Fig. 16, so that the data of at least 48 dots are required for character recognition. Thus the step S9 reads the vertical data of at least 48 dots, and a step S10 discriminates whether data to be printed are present therein. If absent, the sequence proceeds to a step S20 for continuing the processing.

If the data to be printed are present in the vertical data of at least 48 dots, a step S11 sets a character start address and clears a character counter. Then a step S12 renews the address in the main scanning direction, and reads the above-mentioned data of 48 vertical dots. If a step S13 identifies the presence of the data to be printed, and step S15 effects an increment of the character counter, and then the sequence returns to the step S12.

If the step S13 identifies the absence of the data to be printed, a step S14 sets the character counter. A step S16 reads, in succession from the character start address set in the step S14, the Y, M, C data positionably corresponding to black data of 48 dots or more in vertical and black data of one dot or more adjacent thereto, from respective buffers. If a step S17 identifies the absence of data to be printed in the thus read data, the Bk data are not altered, and the processing is continued until the character counter reaches 0 in a step S20. On the other hand, if the data to be printed are present, even in a dot, in the data read from the Y, M and C buffers, a step S18 writes, from the character start address of the Bk buffer, the data corresponding to the character counter into the Y, M and C buffers. Then a step S19 clears the Bk data which have thus been written into the buffers. Thereby, the Bk data are converted into Y, M, C data. Then a step S21 discriminates whether the processing of the predetermined data number has been completed, and, if not, the above-explained steps are repeated until the predetermined processing is completed.

The data thus processed are printed on the recording paper according to the instruction of the system controller 301 shown in Fig. 8.

As explained in the foregoing, the Bk character data in the print positions same as or adjacent to those of the C, M or Y data are printed with the Y, M and C inks. Thus the color blotting can be alleviated without a variation in hue within a character.

[Embodiment 5]

In this embodiment, black bit image data transferred from the host computer 306 shown in Fig. 8 are stored in the Y, M and C buffers. Then, if color data are not transferred, the Y, M and C data are written into the Bk buffer, the data in the Y, M, C buffers are deleted and the characters are printed with the Bk ink only.

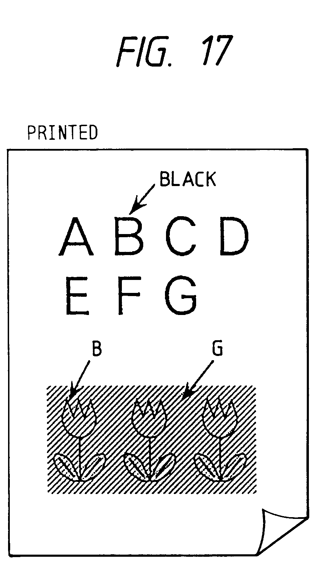

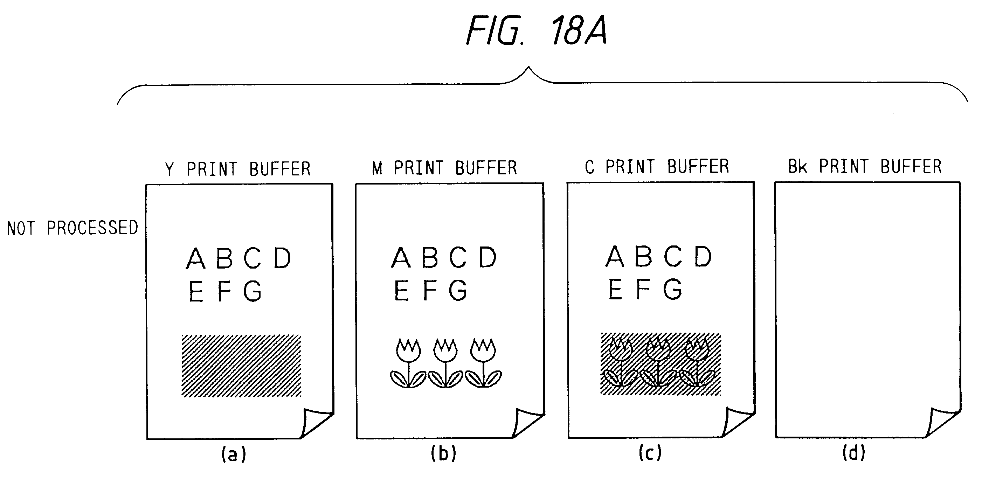

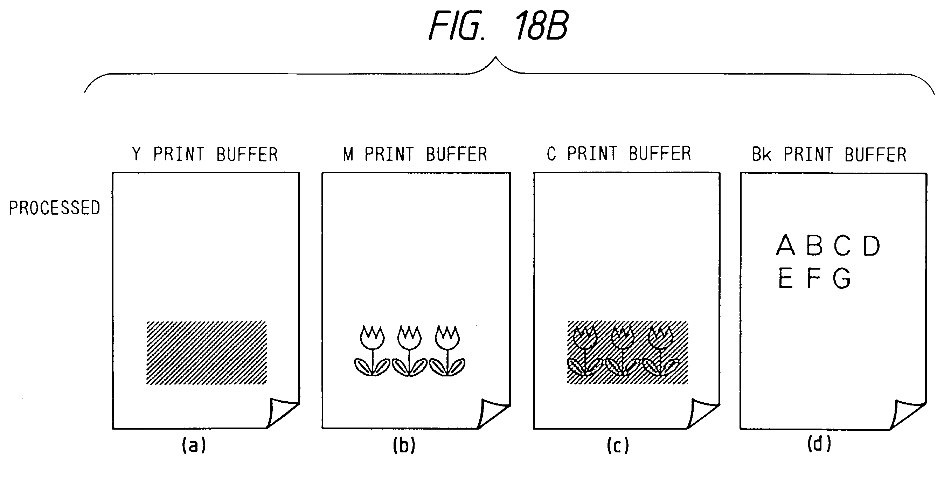

Fig. 17 illustrates a case in which characters "ABCDEFG" and a lower pattern are all transferred by the bit image data. In such case, as shown in (a) to (d) in Fig. 18A, the characters "ABCDEFG" are all developed in the Y, M, C buffers. This can be attained in the same manner as in the foregoing 2nd to 4th embodiments.

In case black data "ABCDEFG" alone exist as in the upper half of the recording sheet, the data "ABCDEFG" are developed in the Bk buffer and the data in the C, M, Y buffers are deleted, as shown in (a) to (d) in Fig. 18A.

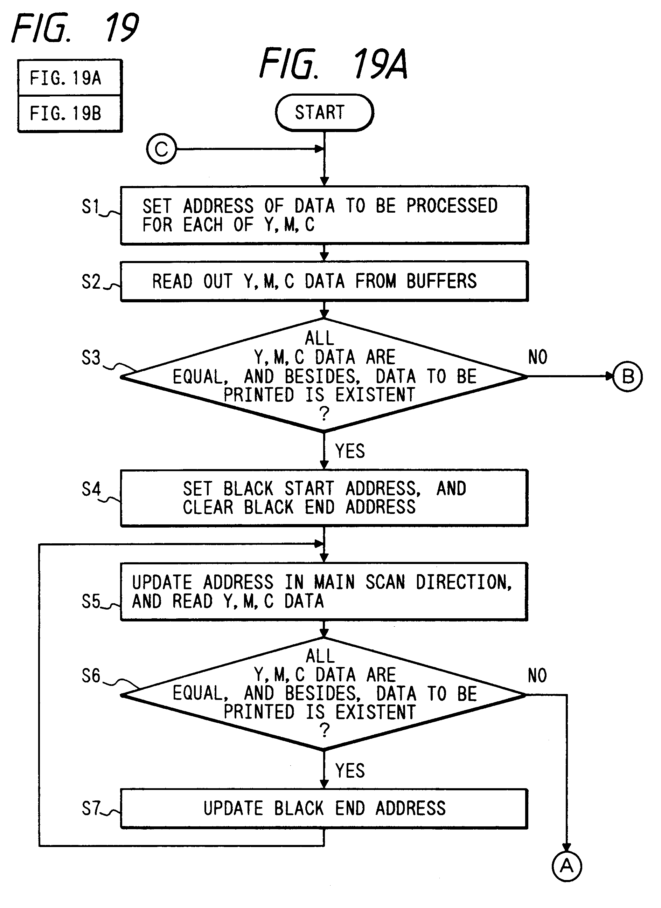

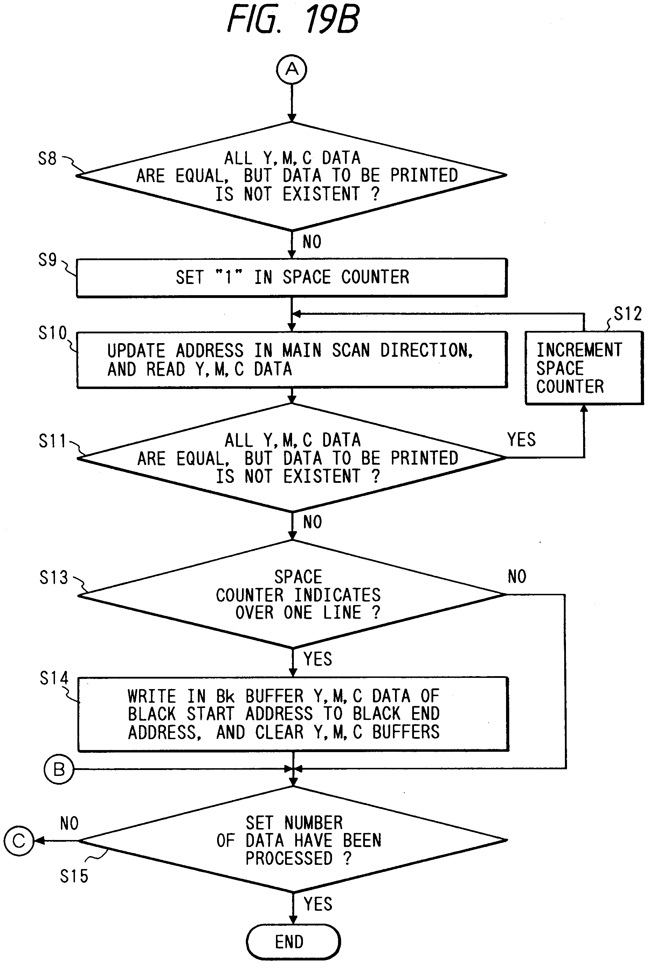

In the following, the sequence of the present embodiment will be explained in detail, with reference to a flow chart shown in Fig. 19, and it is assumed that all the data have been developed into the buffers.

A step S1 sets, for each of the C, M and Y colors, an address of the data to be processed. Said addresses correspond to a same print position on the recording paper. Then a step S2 read the Y, M, C color data from the buffers. Said data reading can be executed with any number of dot, from a dot to a number of dots corresponding to the recording sheet.

If a step S3 identifies data to be printed, identical for the Y, M and C data, a step S4 sets a black start address (print position with the black ink), and clears a black end address.

Then a step S5 renews the address in the main scanning direction, and reads the data of the different colors. Then if a step S6 identifies same data to be printed in the Y, M and C colors, a step S7 renews the black end address. If there exist same data to be printed in the different colors, the sequence of the steps S5 to S7 is executed in continuation. If the processing is completed in the main scanning direction, the address is renewed in the sub scanning direction, and the above-explained processing is executed in continuation.

If the discrimination in the step S6 turns out negative and if a step S8 identifies the absence of same data to be printed, a step S9 sets "1" in a blank counter. Then a step S10 renews the address in the main scanning direction, and reads the data of the different colors. Then, if a step S11 identifies the absence of same data to be printed, a step S12 effects an increment of the blank counter.

On the other hand, if the discrimination of the step S11 turns out negative, a step S12 discriminates whether the count of the blank counter exceeds a main scanning line. If said scanning line is exceeded, a step S13 writes the Y, M, C data from said black start address to the black end address into the Bk buffer, and clears the C, M and Y buffers and the blank counter. Then a step S14 discriminates whether the processing of the predetermined data number has been completed, and, if not, the sequence returns to the step S1 for continuing the processing.

Also when the step S12 identifies that the count of the blank counter does not exceed a main scanning line, the step S14 similarly discriminates whether the processing of the predetermined data number has been completed, and, if not the sequence returns to the step S1.

The method of converting the bit image data into the Bk data in the unit of a block defined by the detection of the blank line can reduce the amount of consumption of the inks, and can improve the print quality because of absence of superposition of the inks, in comparison with the method of printing black color with three color inks.

The present embodiment can be combined with any of the foregoing 2nd to 4th embodiments, and the advantage remains basically same also in such combination.

As explained in the foregoing, the present embodiment can reduce the blotting between the black ink and other color inks of yellow, magenta and cyan colors, while maintaining the print quality of the characters.

[Embodiment 6]

The recording apparatus and the recording head in which the present embodiment is applicable will not be explained as they are similar to those in the foregoing embodiments 2 to 5, as represented in Figs. 6 to 8.

The compositions of the inks employed in the present embodiment are shown in Table 4.

Table 4

1)  Y (yellow) ink

C.I. direct yellow 86          3 parts

Diethylene glycol             10 parts

Isopropyl alcohol              2 parts

Urea                           5 parts

Acetylenol EH (Kawaken Chemical)  1 part

Water                          remainder (or balance)

2) M (magenta) ink

| | |
|---|---|
| C.I. acid red 289 | 3 parts |
| Diethylene glycol | 10 parts |
| Isopropyl alcohol | 2 parts |
| Urea | 5 parts |
| Acetylenol EH (Kawaken Chemical) | 1 part |
| Water | remainder |

3) C (cyan) ink

| | |
|---|---|
| C.I. direct blue 199 | 3 parts |
| Diethylene glycol | 10 parts |
| Isopropyl alcohol | 2 parts |
| Urea | 5 parts |
| Acetylenol EH (Kawaken Chemical) | 1 part |
| Water | remainder |

4) Bk (black) ink

| | |
|---|---|
| C.I. direct black 154 | 3 parts |
| Diethylene glycol | 10 parts |
| Isopropyl alcohol | 2 parts |
| Urea | 5 parts |
| Water | remainder |

In contrast to the Bk ink, the C, M or Y ink is improved in penetrability by the addition of acetylenol EH by 1%. Other surfactants or alcohols may also be added.

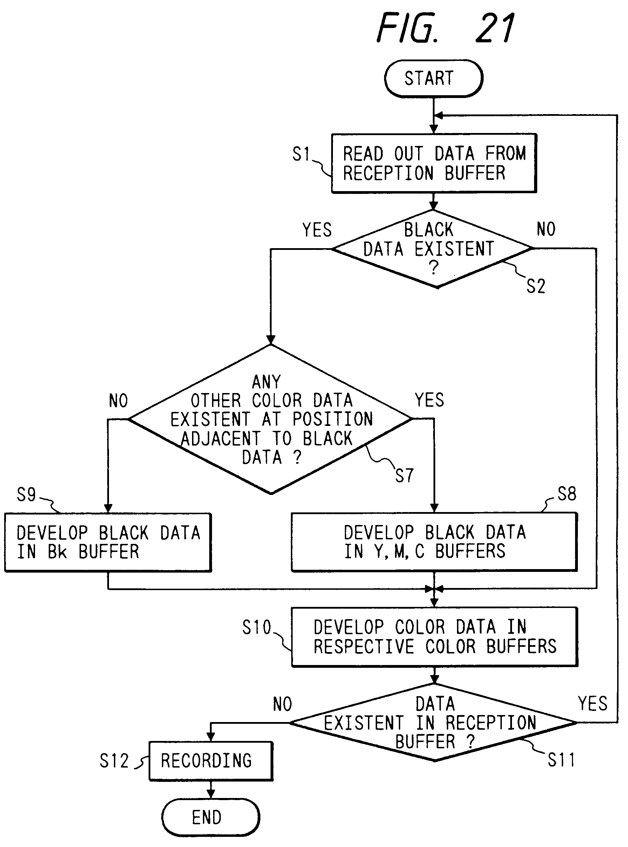

Fig. 21 is a flow chart showing the control sequence of the 6th embodiment.

A step S1 causes the system controller 301 to read the data, transferred from the host computer 306 and stored in the reception buffer 307. A step S2 discriminates whether the read data contain black data or consist of color data other than black, and the sequence proceeds respectively to a step S7 or S10.

A step S7 refers to black data, and discriminates whether color data are present in positions adjacent to the periphery of a black image recording area. The adjacent positions mean "upper and/or lower and/or left and/or right" positions to each pixel constituting a black image area on the recording medium, and there is discriminated whether at least a color recording pixel constituting a color image area is present in such position. The pitch P of the pixels is about 70.56 μm, and the recording density is 360 dpi. The sequence proceeds to a step S8 or S9 respectively if a color pixel is present or absent adjacent to the black recording pixels.

The step S8 develops the black recording pixels in the C, M and Y data buffers for color recording. The step S9 develops the black recording pixels in the Bk data buffer for black recording. Then a step S10 develops the color data of different colors in the data buffers of respective colors. A step S11 reads the data from the reception buffer, and discriminates whether data to be printed are present and whether data of a page have been received. If the data to be printed are absent, or if the data to be printed are present and the data of a page have been received, the sequence proceeds to a step S12. Otherwise the sequence returns to the step S1. The step S12 executes the recording operation, by activating the recording head 102.

The process of the present embodiment will be explained with the image example shown in Figs. 20A to 20C. The image portion A, consisting of black color only without the background color, or consisting of black image areas not contacted by color image areas, is printed with the black ink recording head. The image portion B is similarly printed with the black ink recording head. In the image portions C and D, the black images, being completely surrounded by the images of other colors, are recorded with the three Y, M and C color inks. In the image portion E, among the black bit image data, the numeral "1" is printed with the black recording head, as it is not in contact, in the periphery thereof, with a color image. The numeral "3" is recorded with the color ink recording heads, as it is completely surrounded by the magenta image. The numeral "2" is printed with the color ink recording heads, as it is adjacent, in a part of the periphery, with the magenta image.

As explained above, an independent black image area, without contacting another color image area, is recorded with the Bk ink of a high print density, with suppressed feathering phenomenon. A non-independent black image area, at least partially contacting or superposed with another color image area, is printed with the C, M and Y inks. In this manner there can be obtained a color image of high quality, in which the color blotting between the black color and other colors.

The discrimination of the presence of color image data in the pixels adjacent to the periphery of the black image area is executed by a software in the present embodiment, but it may also be achieved by a hardware.

[Embodiment 7]

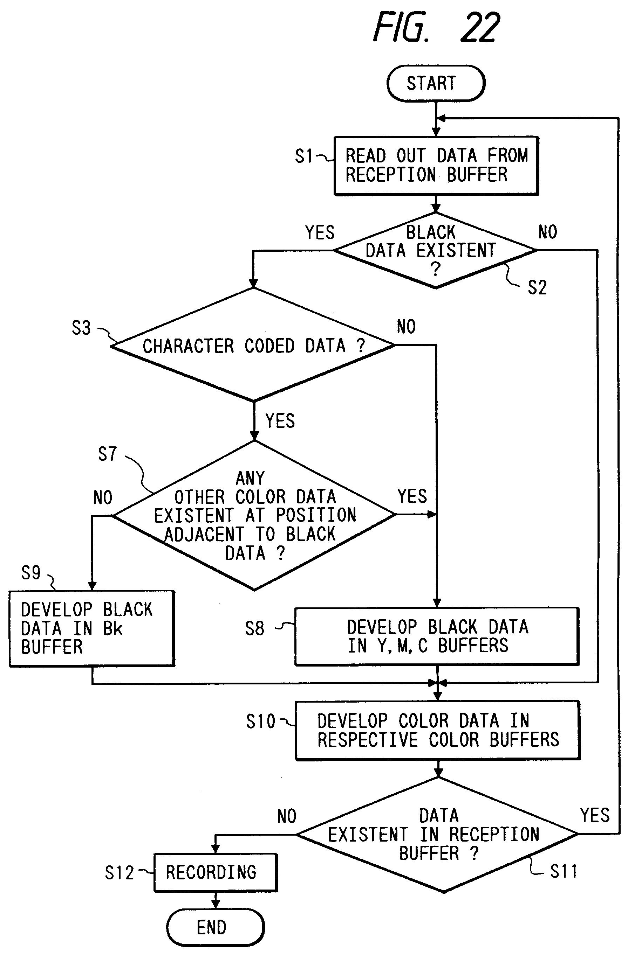

The embodiment 6 discriminates the presence of other color image areas adjacent to all the black image areas, but such discrimination requires a relatively long time and is burdensome for the recording operation designed for a high-speed recording process. The present embodiment is to achieve a process of a higher speed, by applying similar discrimination only on the character codes in the black image areas as shown in Fig. 22.

In comparison with the flow chart of the embodiment 6 shown in Fig. 21, the flow chart shown in Fig. 22 additionally contains a step S3. Because of said step S3, a black image area consisting of character codes is processed in the same manner as in Fig. 21, but other black image areas, consisting for example of bit image data, are developed in the C, M and Y data buffers for color recording, in a step S8.

Such process provides an advantage of maintaining black characters at high print quality.

[Embodiment 8]

In the step S7 of the embodiment 6, shown in Fig. 21, the adjacent position to the periphery of the black image area is defined as "upper and/or lower and/or left and/or right" to each pixel constituting the black image. This definition is an example designed for a range not exceeding the pitch P of the pixels, but should be selected wider for certain inks or recording medium to be employed.

Experiments were conducted for printing on the plain paper of various grades with the inks of the embodiment 6. At first the surrounding area $X \cdot P$ of the black image areas was defined by $X = \sqrt{2}$ wherein P is the pixel recording pitch, thereby considering "upper and/or lower and/or left and/or right and/or upper right and/or upper left and/or lower right and/or lower left" positions with respect to the object black pixel. Then, also considered were the cases of $X = 2$ and $X = 2\sqrt{2}$. In this manner, the effect of the present invention was satisfactorily obtained on the plain paper of most grades, by the consideration within a range of $X = 4\sqrt{2}$,

Based on the above-mentioned results, in the present embodiment, there is considered the presence of at least a color recording pixel constituting a color image area in an adjacent position to the periphery of an object black image area, wherein said adjacent position is defined by $X \cdot P$ in which P is the minimum pixel recording pitch, and a range $4\sqrt{2} \geq X \geq 1$ is effective for the present embodiment.

[Embodiment 9]

The embodiment 6 utilizes a frame buffer capable of recording the data of a page, but the present invention is effective also in case a line buffer is employed instead.

In the step S7 in Fig. 21, the adjacent position to the periphery of the black image area is defined by "upper and/or lower and/or left and/or right" position adjacent to each pixel constituting a black image area, but this definition is replaced by a definition that the periphery of a black image area is not adjacent to other colors in the effective recording range of said line buffer.

[Embodiment 10]

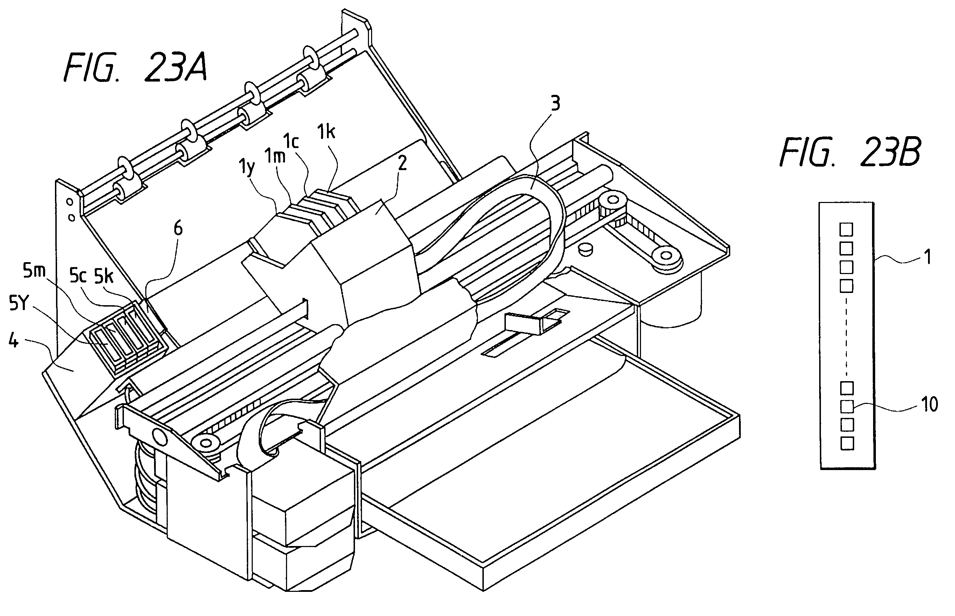

Fig. 23A is a schematic view of another recording apparatus in which the color ink jet recording method of the present invention is applicable, wherein provided are a yellow ink recording head 1y; a magenta ink recording head 1m; a cyan ink recording head 1c; a black ink recording head 1k; a carriage 2 supporting said recording heads; a flexible cable 3 for sending electrical signals to the recording heads from the main body of the apparatus; a capping unit 4 provided with recovery means; capping members 5y, 5m, 5c, 5k respectively corresponding to the recording heads 1y, 1m, 1c, 1k; a wiper blade 6 composed for example of rubber; and a recording paper 7 supported in opposed relation to the recording heads.

Fig. 23B illustrates one of the four recording heads mounted on said recording apparatus. In a portion opposed to the recording paper, there are formed 64 discharge openings 10, with a density of 360 dpi. Said discharge openings 10 respectively communicate with liquid paths, behind which there is provided a common liquid chamber for supplying said liquid paths with ink. In the liquid paths respectively corresponding to the discharge openings, there are provided electrothermal converters for generating thermal energy for emitting ink droplets from said discharge openings, and wirings for supplying said converters with an electric power.

The present embodiment can achieve black recording of high quality and color recording of high quality in compatible manner, by recording a black image area with a high density and with reduced feathering in case of an independent black image area not in contact with a color image area, and avoiding ink blotting between the black color and other colors in other image areas.

[Embodiments 11 - 18]

At first there will be explained the outline of these embodiments.

In the course of investigation for achieving a color recording with high black character quality and without bleeding on the plain paper, the present inventors have found that high quality black recording and high quality color recording are rendered compatible by selecting the blotting rate of the black ink smaller than that of the color inks, and also by discriminating whether a color image area is present adjacent to the black image area and forming said black image area either by the black ink or by the plural color inks according to the result of said discrimination.

In order to prevent bleeding between the inks, it is necessary to increase the wetting property of the ink to the recording paper, thereby increasing the blotting rate. However an excessively large blotting rate leads to an irregular shape of the recorded dot, thus deteriorating particularly the print quality of the characters. It is however possible to improve the print quality of black characters, by selecting the blotting rate of the black ink lower than that of other color inks.

Also since the color inks of a high blotting rate are fixed faster, the black ink flows into the fixed area of the color inks in case the black ink and the color inks are in mutual contact, thereby causing bleeding phenomenon between the black and color images. Such flow of the black ink can be prevented by forming the black image with plural color inks when a color image area is present adjacent to the black image area. On the other hand, if such adjacent color image is absent, the black image area is formed with the black ink, thereby providing black characters of high quality.

In the present invention, the blotting rate is regulated by the addition of a surfactant and a penetrating solvent to the ink.

Examples of said surfactant include anionic surfactants such as fatty acid salts, sulfate esters of higher alcohols, alkyl benzene sulfonate salts and phosphate esters of higher alcohols; cationic surfactants such as aliphatic amine salts and quaternary ammonium salts; nonionic surfactants such ethylene oxide adducts of higher alcohols, ethylene oxide adducts of alkyl phenols, aliphatic ethylene oxide adducts, ethylene oxide adducts of polyvalent alcohol-fatty acid esters, ethylene oxide adducts of higher alkylamines, ethylene oxide adducts of fatty acid amides, ethylene oxide adducts of polypropylene glycol, fatty acid esters of polyhydric alcohols, and fatty acid amides of alkanol amines; and amphoteric surfactants or amino acid type and betain type. Though not limitative, there is preferably employed a nonionic surfactant such as an ethylene oxide adduct of higher alcohol, an ethylene oxide adduct of alkylphenol, ethylene oxide-propylene oxide copolymer, or an ethylene oxide adduct of acetylene glycol. The amount of addition of ethylene oxide in said adducts is preferably in a range of 4 to 20 moles.

The amount of addition of such surfactant is not limited, but is preferably within a range of 0.01 to 10%, since an amount less than 0.01% does not provide, in general, a sufficient increase in the blotting rate, while an amount exceeding 10% increases the initial viscosity of the ink.

Also the preferred examples of the solvent furnishing the penetrability include ethers such as tetrahydrofurane or dioxane; lower alkyl ethers of polyhydric alcohols such as ethyleneglycol methyl ether, diethyleneglycol monomethyl ether, or triethyleneglycol monomethyl ether; ethanol and isopropyl alcohol.

The amount of addition of such solvent is not limited, but is preferably within a range of 0.1 to 20%, since an amount less than 0.1% does not provide, in general, a sufficient increase in the blotting rate, while an amount exceeding 20% somewhat reduces the solubility of the coloring materials.

In the recording inks, there can be used most of the water-soluble acid dyes, direct dyes, basic dyes and reactive dyes contained in the Color Index. Also those not listed in the Color Index may be used if they are water-soluble. The amount of such dye is not particularly limited, but is preferably employed in an amount of 0.1 to 20 wt.% with respect to the total ink weight.

Such recording inks usually contain water and water-soluble organic solvent, in addition to the additives mentioned above. Examples of such water-soluble organic solvent include amides such as dimethylformamide or dimethylacetamide; ketones such as acetone; polyalkylene glycols such as polyethylene glycol or polypropylene glycol; alkylene glycols such as ethylene glycol, propylene glycol, buthylene glycol, triethylene glycol, 1,2,6-hexanetriol, thiodiglycol, hexylene glycol or diethylene glycol; lower alkyl ethers of polyhydric alcohols such as ethylene glycol monomethylether, diethylene glycol monomethylether or triethylene glycol monomethylether; monohydric alcohols such as methanol or isopropyl alcohol; glycerine, N-methyl-2-pyrrolidone, 1,3-dimethyl-2-imidazolidine, triethanolamine, sulfolane and dimethylsulfoxide. The amount of said water-soluble organic solvent is not particularly limited, but is preferably employed within a range of 1 to 80 wt.%.

In addition, the recording ink may further contain, if necessary, other additives such as a viscosity regulator, a pH regulator, an anticeptic, an antioxidant and an evaporation accelerator.

The amount of discharge per drop of the ink employed in the present invention is, though somewhat dependent on the recording density, preferably within a range of 10 to 300 pl for the black ink, and 5 - 100 pl for the color inks. An amount less than 10 pl for the black ink or 5 pl for the color ink cannot provide a sufficient print density, while an amount exceeding 300 pl for the black ink or 100 pl for the color ink may exceeds the absorbing capacity of the recording paper.

In the present embodiments, which are featured by a fact that the blotting rate of the black inks is smaller than that of the color inks, the blotting rate is preferably within the following ranges:

Blotting rate of black ink: 1.2 - 2.5
Blotting rate of color inks: 1.8 - 3.5

Black ink with a blotting rate less than 1.2 shows a limited spreading of the ink droplet, and has to be deposited with a larger amount in recording a solid black image, thus eventually exceeding the absorbing capacity of the recording paper. On the other hand, black ink with a blotting rate exceeding 2.5 shows excessive spreading of the ink droplet, thus losing the edge sharpness of the recorded dot and deteriorating the print quality.

Also color ink with a blotting rate less than 1.8 enhances the bleeding phenomenon between different colors, while color ink with a blotting rate exceeding 3.5 shows a reduced density because of the excessive spreading of the ink droplet.

The blotting rate is regulated by the amount of the surfactant and the penetrating solvent, but it can also be regulated, if necessary, by the amount of solvent or by the adjustment of physical properties such as surface tension or viscosity.

In the following the recording method of the present embodiments will be explained in detail, with reference to the attached drawings. The recording apparatus and the recording head to be employed in the present embodiments are same as those already explained with reference to Figs. 6 to 8. Also the control sequences in the present embodiments are same as those in the embodiments 6 to 10, explained in relation to Figs. 21 to 24, and will not, therefore, be explained further.

In the following description of the embodiments and reference examples, the amounts are shown by parts or per cent by weight unless otherwise specified.

The recording inks (1) - (10) were obtained by dissolving the following components under agitation, and filtering the obtained solution under pressure with a membrane filter of a pore size of 0.22 μm (Fluoropore Filter, a trade name of Sumitomo Denko Co., Ltd.).

(1)

Yellow

| | |
|---|---|
| C.I. direct yellow 86 | 2 parts |
| Ethylene oxide adduct of lauryl alcohol (10 moles added) | 0.5 parts |
| Diethylene glycol | 30 parts |
| Water | 67.5 parts |

Magenta

| | |
|---|---|
| C.I. acid red 35 | 3 parts |
| Ethylene oxide adduct of lauryl alcohol (10 moles added) | 0.5 parts |
| Diethylene glycol | 30 parts |
| Water | 66.5 parts |

Cyan

| | |
|---|---|
| C.I. direct blue 199 | 2 parts |
| Ethylene oxide adduct of lauryl alcohol (10 moles added) | 0.5 parts |
| Diethylene glycol | 30 parts |
| Water | 67.5 parts |

Black

| | |
|---|---|
| C.I. food black 2 | 2 parts |
| Diethylene glycol | 10 parts |
| Water | 88 parts |

(2)

Yellow

| | |
|---|---|
| C.I. direct yellow 86 | 2 parts |
| Ethylene oxide adduct of nonyl alcohol (18 moles added) | 5 parts |
| Diethylene glycol | 15 parts |
| Water | 78 parts |

Magenta

| | |
|---|---|
| C.I. acid red 35 | 3 parts |
| Ethylene oxide adduct of nonyl alcohol (18 moles added) | 5 parts |
| Diethylene glycol | 15 parts |
| Water | 77 parts |

Cyan

| | |
|---|---|
| C.I. direct blue 199 | 2 parts |
| Ethylene oxide adduct of nonyl alcohol (18 moles added) | 5 parts |
| Diethylene glycol | 15 parts |
| Water | 78 parts |

Black

| | |
|---|---|
| C.I. food black 2 | 2 parts |
| Diethylene glycol | 10 parts |
| Water | 88 parts |

(3)

Yellow

    C.I. direct yellow 86         2 parts

    Ethylene oxide-propylene oxide copolymer (7 moles

    added)                   3 parts

    Thiodiglycol            20 parts

    Water                  75 parts

Magenta

    C.I. acid red 35         3 parts

    Ethylene oxide-propylene oxide copolymer (7 moles

    added)                   3 parts

    Thiodiglycol             20 parts

    Water                  74 parts

Cyan

    C.I. direct blue 199       2 parts

    Ethylene oxide-propylene oxide copolymer (7 moles

    added)                   3 parts

    Thiodiglycol             20 parts

    Water                  75 parts

Black

    C.I. food black 2         2 parts

    Thiodiglycol             15 parts

    Water                  83 parts

(4)

Yellow

    C.I. direct yellow 86       2 parts

    Ethylene oxide adduct of acetylene glycol (10 moles

    added)                   1 part

Thiodiglycol                    10 parts

Glycerine                       10 parts

Water                           77 parts

Magenta

C.I. acid red 35                 3 parts

Ethylene oxide adduct of acetylene glycol (10 moles

added)                           1 part

Thiodiglycol                    10 parts

Glycerine                       10 parts

Water                           76 parts

Cyan

C.I. direct blue 199             2 parts

Ethylene oxide adduct of acetylene glycol (10 moles

added)                           1 part

Thiodiglycol                    10 parts

Glycerine                       10 parts

Water                           65 parts

Black

C.I. food black 2                3 parts

Thiodiglycol                     5 parts

Glycerine                        5 parts

Urea                             5 parts

Isopropyl alcohol                3 parts

Water                           79 parts

(5)

Yellow

C.I. direct yellow 86            2 parts

|                            |             |
|----------------------------|-------------|
| Decaglycerine monolaurate  | 15 parts    |
| Diethylene glycol          | 30 parts    |
| Water                      | 50.2 parts  |

Magenta

|                            |             |
|----------------------------|-------------|
| C.I. acid red              | 2 parts     |
| Decaglycerine monolaurate  | 15 parts    |
| Diethylene glycol          | 30 parts    |
| Water                      | 50.2 parts  |

Cyan

|                            |             |
|----------------------------|-------------|
| C.I. direct blue 199       | 2 parts     |
| Decaglycerine monolaurate  | 15 parts    |
| Diethylene glycol          | 30 parts    |
| Water                      | 50.2 parts  |

Black

|                            |             |
|----------------------------|-------------|
| C.I. food black 2          | 2 parts     |
| Decaglycerine monolaurate  | 0.2 parts   |
| Diethylene glycol          | 12 parts    |
| Water                      | 85.8 parts  |

(6)

Yellow

|                            |             |
|----------------------------|-------------|
| C.I. direct yellow 86      | 2 parts     |
| Sodium lauryl sulfate      | 0.2 parts   |
| Diethylene glycol          | 15 parts    |
| Water                      | 82.8 parts  |

Magenta

|                            |             |
|----------------------------|-------------|
| C.I. acid red              | 2 parts     |
| Sodium lauryl sulfate      | 0.2 parts   |

| Diethylene glycol | 15 parts |
| Water | 82.8 parts |

Cyan

| C.I. direct blue 199 | 2 parts |
| Sodium lauryl sulfate | 0.2 parts |
| Diethylene glycol | 15 parts |
| Water | 82.8 parts |

Black

| C.I. food black 2 | 2 parts |
| Diethylene glycol | 15 parts |
| Cyclohexanol | 0.1 parts |
| Water | 82.9 parts |

(7)

Yellow

| C.I. direct yellow 86 | 2 parts |
| Ethylene glycol methylether | 15 parts |
| Diethylene glycol | 15 parts |
| Water | 68 parts |

Magenta

| C.I. acid red | 2 parts |
| Ethylene glycol methylether | 15 parts |
| Diethylene glycol | 15 parts |
| Water | 82.8 parts |

Cyan

| C.I. direct blue 199 | 2 parts |
| Ethylene glycol methylether | 15 parts |
| Diethylene glycol | 15 parts |
| Water | 82.8 parts |

Black

| | |
|---|---|
| C.I. food black 2 | 2 parts |
| Diethylene glycol | 15 parts |
| Cyclohexanol | 0.1 parts |
| Water | 82.9 parts |

(8)

Yellow

| | |
|---|---|
| C.I. direct yellow 86 | 2 parts |
| Isopropyl alcohol | 15 parts |
| Diethylene glycol | 15 parts |
| Water | 68 parts |

Magenta

| | |
|---|---|
| C.I. acid red | 2 parts |
| Isopropyl alcohol | 15 parts |
| Diethylene glycol | 15 parts |
| Water | 82.8 parts |

Cyan

| | |
|---|---|
| C.I. direct blue 199 | 2 parts |
| Isopropyl alcohol | 15 parts |
| Diethylene glycol | 15 parts |
| Water | 82.8 parts |

Black

| | |
|---|---|
| C.I. food black 2 | 2 parts |
| Diethylene glycol | 15 parts |
| Cyclohexanol | 1 part |
| Water | 82 parts |

(9)  Reference example

Yellow

| | |
|---|---|
| C.I. direct yellow 86 | 2 parts |
| Diethylene glycol | 15 parts |
| Water | 83 parts |

Magenta

| | |
|---|---|
| C.I. acid red | 2 parts |
| Diethylene glycol | 15 parts |
| Water | 83 parts |

Cyan

| | |
|---|---|
| C.I. direct blue 199 | 2 parts |
| Diethylene glycol | 15 parts |
| Water | 83 parts |

Black

| | |
|---|---|
| C.I. food black 2 | 2 parts |
| Diethylene glycol | 15 parts |
| Ethylene oxide-propylene oxide copolymer (7 moles added) | 3 parts |
| Water | 80 parts |

(10)

Yellow

| | |
|---|---|
| C.I. direct yellow 86 | 2 parts |
| Diethylene glycol | 5 parts |
| Cyclohexanol | 0.1 parts |
| Water | 92.9 parts |

Magenta

| | |
|---|---|
| C.I. acid red | 2 parts |

| | |
|---|---|
| Cyclohexanol | 0.1 parts |
| Diethylene glycol | 5 parts |
| Water | 92.9 parts |

Cyan

| | |
|---|---|
| C.I. direct blue 199 | 2 parts |
| Cyclohexanol | 0.1 parts |
| Diethylene glycol | 5 parts |
| Water | 92.9 parts |

Black

| | |
|---|---|
| C.I. food black 2 | 2 parts |
| Diethylene glycol | 35 parts |
| Cyclohexanol | 3 parts |
| Water | 60 parts |

The above-mentioned inks (1) to (10) were used in the recording operations on quality paper, commercially available copying paper and bond paper, with the recording apparatus shown in Fig. 6 and the recording head shown in Figs. 7A and 7B, according to the operation sequence shown in Fig. 21, in which the black image adjacent to a color image is recorded with the yellow, magenta and cyan inks, while the independent black image is recorded with the black ink.

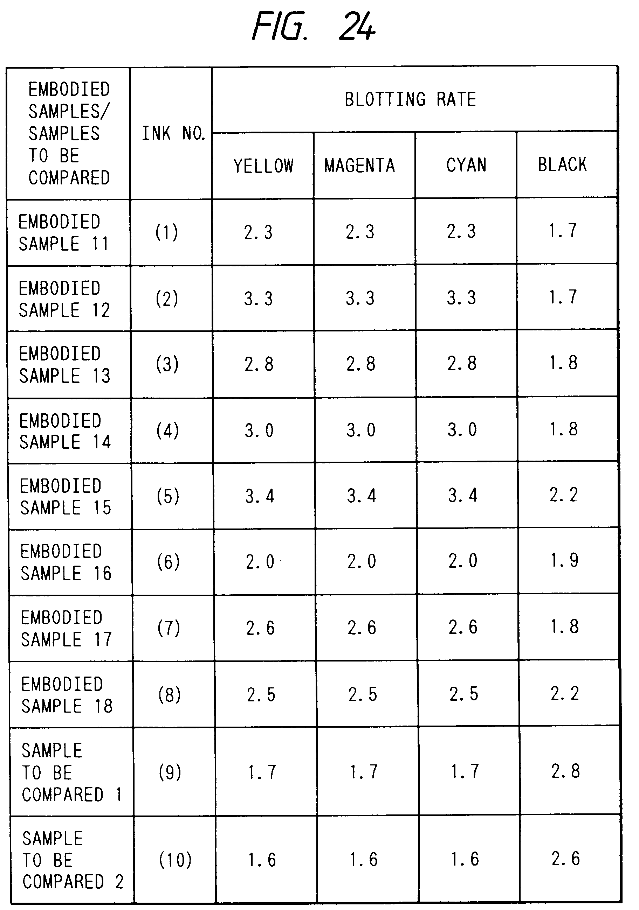

Fig. 24 shows the dot diameters of the black and color inks on the obtained records, and the blotting rates determined from the dot diameters.

The recorded dot on the quality paper was observed with a CCD camera and was subjected to the calculation of dot area by image processing, and said area was converted into the diameter of a true circle. Thus obtained diameter was taken as B in the equation I.

Also the diameter of ink droplet (C in the equation I) was determined from the following equation:

$$V = (4/3)\pi(C/2) \times 10^{-3}$$

wherein V is the liquid volume (p1) discharged per pulse.

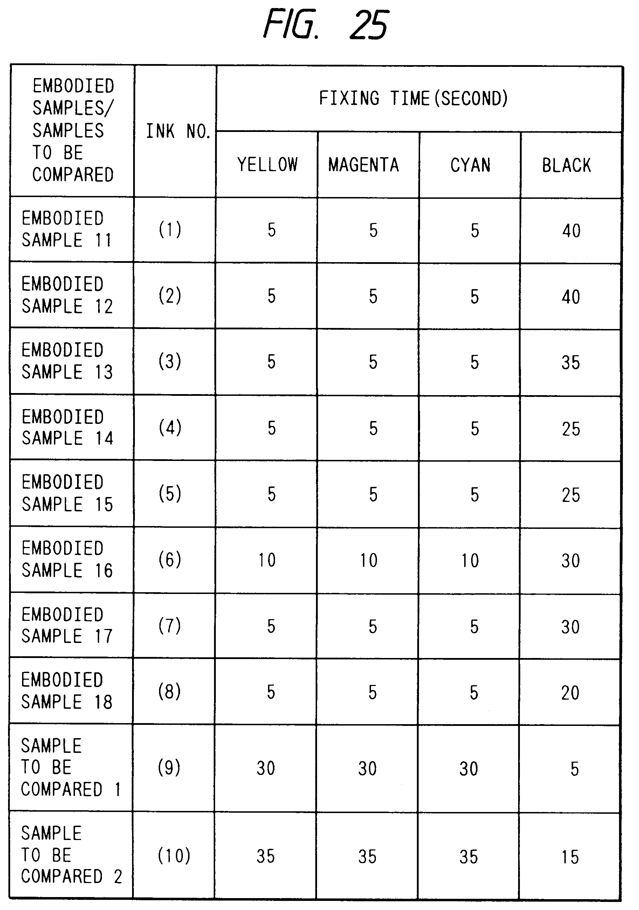

Also Fig. 25 shows the fixing times of the black and color inks in the obtained records. Said fixing time was measured by solid printing (100% duty) on the commercially available quality paper with the yellow, magenta, magenta and black inks, then rubbing the printed area with filter paper (Toyo Filter Paper Co., Ltd., No. 5C) at intervals of 5 seconds after the printing, and determining a time at which the smear by rubbing no longer takes place.

[Method and criteria of evaluation]

(1) Bleeding

A color sample in which different colors are mutually adjacent was printed, and the state of bleeding was observed and evaluated in the following manner. Used for this evaluation were seven colors, namely black, yellow, magenta, cyan, and red, green and blue obtain by superposing two of said yellow, magenta and cyan, but the evaluation was divided into the bleeding between black and one of yellow, magenta, cyan, red, green and blue, and the bleeding between said colors:

○: No bleeding observed at the boundary between colors;

△:  Bleeding at the boundary between colors is observable but within the practically tolerable level;

X:  Bleeding is conspicuous and practically not acceptable.

(2) Black character quality

Black alphanumerical characters were recorded so as not to be adjacent to a color image, and, after a standing for one hour, the record was observed under a microscope for the irregular blotting and the edge sharpness, according to the following criteria:

◯:  Character edges are sharp, without irregular blotting;

△:  Irregular blotting is observable but within a practically acceptable range;

X:  Character edges are unsharp, with irregular blotting, and are practically unacceptable.

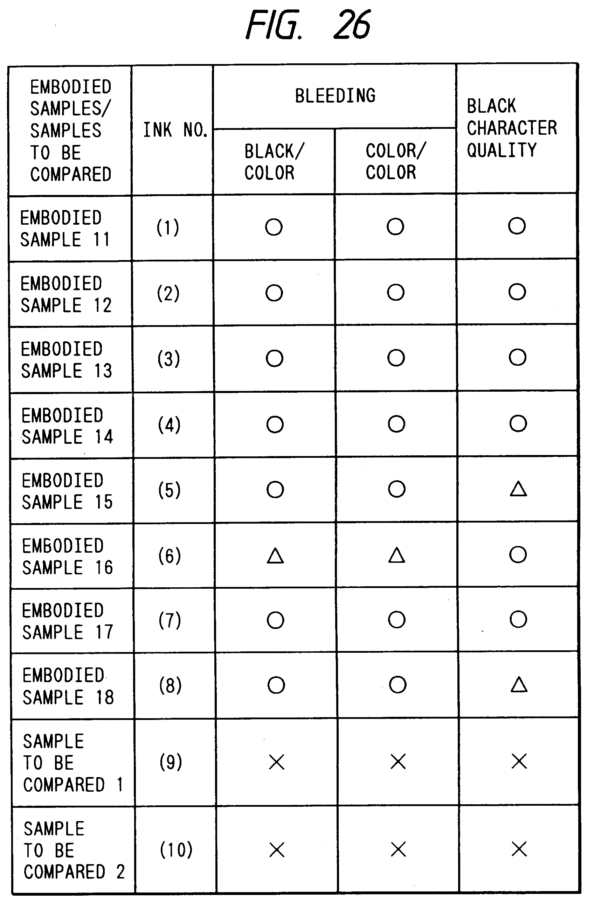

The results of these evaluations are shown in Fig. 26.

As explained in the foregoing, the present invention renders black recording of high quality and color recording of high quality compatible, by recording a black image area with a high record density, thereby improving the print quality in case said black image area is independent without contact with a color image area, and avoiding the ink blotting between the black and other colors or among said other colors in other image areas.

Among various link jet recording methods, the present invention brings about a particular-effect when applied to a recording head provided with means for generating thermal energy (such as electrothermal converter or a laser beam) to be utilized for causing ink discharge and inducing a state change in the ink by said thermal energy, and a recording apparatus employing such recording head, because such method can a higher density or a higher definition in the record.

The principle and representative configuration of such system are disclosed, for example in the U.S. Patents Nos. 4,723,129 and 4,740,796. This system is applicable to so-called on-demand recording or continuous recording, but is particularly effective in the on-demand recording because, in response to the application of at least a drive signal representing the recording information to an electrothermal converter element positioned corresponding to a liquid channel or a sheet containing liquid (ink) therein, said element generates thermal energy capable of causing a rapid temperature increase exceeding the nucleus boiling point, thereby inducing film boiling on a heat action surface of the recording head and thus forming a bubble in said liquid (ink), in one-to-one correspondence with said drive signal. Said liquid (ink) is discharged through a discharge opening by the growth and contraction of said bubble, thereby forming at least a liquid droplet. Said drive signal is preferably formed as a pulse, as it realizes instantaneous growth and contraction of the bubble, thereby attaining highly responsive discharge of the liquid (ink). Such pulse-shaped drive signal is preferably that disclosed in the U.S. Patents Nos. 4,463,359 and 4,345,262. Also the conditions described in the U.S. Patent No. 4,313,124 relative to the temperature increase rate of said heat action surface allows to obtain further improved recording.

The configuration of the recording head is tiven by the combinations of the liquid discharge openings, liquid channels and electrothermal converter elements with linear or rectangular liquid channels, disclosed in the above-mentioned patents, but a configuration disclosed in the U.S. Patent No. 4,558,333 in which the head action patt is positioned in a flexed area, and a configuration disclosed in the U.S. Patent No. 4,459,600 also belong to the present invention. Furthermore the present invention is effective in a structure disclosed in the Japanese Patent Laid-open Application No. 59-123670, having a slit common to plural electrothermal converter elements as a discharge opening therefor, or in a structure disclosed in the Japanese Patent Laid-open Application No. 59-138461, having an aperture for absorbing the pressure wave of thermal energy, in correspondence with each discharge opening. Stated differently the present invention can achieve the recording in securer and more efficient manner, regardless of the configuration of the recording head.

Furthermore, the ink jet recording apparatus of the present invention is usable not only as an image output terminal for an information processing equipment such as a computer, but also may assume a form of a copying machine in combination with an image reader, or a facsimile apparatus with transmitting receiving functions.

**Claims**

1. A color image forming method for forming a color image on a recording medium, comprising the steps of:

forming an image using a black liquid having surface tension characteristics greater than those of plural color liquids different in color from said black liquid; and
forming an image using said plural color liquids;
wherein said latter step forms a predetermined width of black image pixels at the boundary of the black image area.

2. A color image forming method according to claim 1, wherein said predetermined width of pixels is formed also using said black liquid.

3. A color image recording apparatus comprising:

liquid jet recording means adapted to discharge onto a recording medium a black liquid and plural liquids of different colors, said black liquid having a diffusability greater than that of the color liquids and a penetrability less than that of the color liquids; and

control means for causing said recording means to discharge black liquid alone to form a black area on the recording medium, to discharge at least one color liquid to form a non-black area on the recording medium, and to discharge plural color liquids to form a black area of a predetermined width of pixels at the boundary between the black area and the non-black area.

4. A recording apparatus according to claim 3, wherein said control means is arranged to cause said recording means also to discharge said black liquid in said predetermined width at the boundary.

5. A color image recording apparatus comprising:

liquid jet recording means for discharging black and different color liquids onto a recording medium; and

means for supplying said recording means with recording signals;

wherein said recording signal supplying means is adapted to supply said recording means with a signal for causing discharge of only black liquid having surface tension and diffusibility characteristics greater than said different color liquids in a black character area, a signal for causing discharge of a different color liquid of superior penetrability to said black liquid in a non-black color area, and a signal for causing discharge of a plurality of said different color liquids in a black region at the boundary between said black and non-black color areas.

6. A recording apparatus according to claim 5, wherein said recording signal supplying means is adapted to supply said recording means with a signal for causing discharge of said black liquid in said black boundary region.

7. A color image forming method for forming a color image on a recording medium by means of liquids of different colors, comprising the steps of:

forming an image with a first color liquid having a penetration time, from the deposition onto the recording medium to the abrupt change in the amount of surface reflected light, of the order of 100 msec; and

forming an image with a second color liquid having a luminosity lower than that of said first color liquid and a penetration time of the order of a second, wherein said first color liquid is cyan, magenta or yellow and said second color liquid is black.

8. A color image forming method for forming a color image on a recording medium comprising the steps of:

forming a first image area employing a black liquid only; and

forming a second image area with a color liquid different in color from said black liquid, in at least a part of the boundary of said first image area wherein a predetermined area of the first image area adjacent to the second image area is formed using a mixture of the color liquids other than black; and wherein said black liquid has superior surface characteristics relative to said color liquids.

9. A color image recording apparatus comprising:

ink jet recording means provided with plural color ink discharge units arranged at a predetermined pitch in a scanning direction, wherein the recording interval of the adjacent discharge units is in the order of 10 msec; and

means for forming image areas on a recording medium using a first color liquid having a penetration time from deposition onto the recording medium to the abrupt change in the amount of surface reflected light of the order of 100 msec and a second color liquid having a luminosity lower than that of said first color liquid and having a penetration time of the order of a second, and means for forming an image area with the second color liquid only, different in color from the first color liquid, in at least a part of the boundary of the image area to be formed with said first color liquid only.

10. A color ink jet recording method for forming a color image on a recording medium using black ink and color inks of plural colors different from said black ink, said black ink having superior surface active characteristics relative to said color inks, the method comprising the steps of:

discriminating whether a color image is to be present adjacent to a black image; and
forming said black image so that at least a region of a predetermined width of pixels of said black image area adjacent to the boundary to be formed between the black image and the color image is formed by pixels of black ink and pixels of color inks formed by dots formed one color ink and dots formed by at least two color inks.

11. A color ink jet recording method according to claim 10, wherein said black image is formed with said black ink where the periphery of said black image is not to be adjacent to a color image, and said black image is formed with said color inks of plural colors and black where at least a part of the periphery of said black image is to be adjacent to a color image.

12. A color ink jet recording method according to claim 10, wherein said black image is formed with said black ink where the periphery of said black image is not to be adjacent to a color image or where at least a part of said periphery is to be adjacent to a color image, but sad black image is formed with said color inks of plural colors and black where the entire periphery of said black image is to be adjacent to a color image.

13. A color ink jet recording method according to claim 10, wherein said discriminating step is adapted to cause a part of said black image to be formed with the black ink and the remainder to be formed with said color inks of plural colors and black when at least a part of the periphery of said black image is to be adjacent to a color image.

14. A color ink jet recording apparatus comprising:

a black ink recording head for discharging black ink;
plural color ink recording heads for discharging color inks different in color from said black ink, wherein said black ink has superior surface active characteristics relative to said color inks;
means for supplying said black ink recording head and said color ink recording heads with recording signals;
discrimination means for discriminating whether a black image is to be formed adjacent to a color image; and
means for controlling said recording heads so as to discharge inks of said colors other than black in a predetermined width of pixels in a boundary area between a black image and a color image according to the result of the discrimination by said discrimination means so as to form said boundary area of dots formed by one color ink and dots formed by at least two color inks.

15. An apparatus according to claim 14, further comprising a buffer for storing black image data for forming said black image, wherein, among said black image data, character code data are stored in a buffer for the black ink, while the bit image data are stored in buffers for the color inks of plural colors.

16. An apparatus according to claim 15, wherein said supply means is adapted, in the printing of character code data, to supply said black ink recording head with a recording signal for discharging the black ink, in case data of another color are absent, in said buffers of color inks, in the pixels same as or adjacent to the print position of said character code data, but to supply the color ink recording heads with recording signals for discharging the color inks in case such data are present.

17. An apparatus according to claim 15, wherein said supply means is adapted, in the printing of said bit image data, to supply said color ink recording heads with recording signals for discharging color inks in case the data, stored in the buffers for the color inks of plural colors, are mutually different among different colors, but to supply said black ink recording head with a recording signal for discharging the black ink in case said data are mutually equal.

18. An apparatus according to any of claims 10 to 17, wherein said color inks of plural colors are of yellow, magenta and cyan colors.

19. A color ink jet recording method for forming a color image on a recording medium by discharging inks thereon, comprising steps of:

33

forming an image with a black ink; and

forming an image with color inks of plural colors, different from said black ink;

discriminating whether a color image area is present adjacent to a black image area; and

determining whether said black image area is formed with said black ink, or with the color inks of said plural colors, according to the result of said discrimination;

wherein the penetration speed of said black ink into said recording medium is lower than that of the color inks of said plural colors.

20. A color ink jet recording method according to claim 19, wherein said determining step is adapted to determine that said black image area is formed with said black ink in case said black image area is not adjacent to a color image area, and said black image area is formed with the color inks of said plural colors in case at least a part of the periphery of said black image area is adjacent to a color image area.

21. A color ink jet recording method according to claim 20, wherein said discriminating step is adapted to identify that the periphery of said black image area is adjacent to a color image area, in case at least a color recording pixel, constituting the color image area, is present in a recording position within $X \cdot P$ ($4\sqrt{2} \geq X \geq 1$), with respect to at least a black recording pixel constituting the black image area on the recording medium, wherein P is the minimum pixel pitch in recording.

22. A color ink jet recording method according to claim 21, wherein $X = 1$.

23. A color ink jet recording method according to claim 21, wherein $X = \sqrt{2}$.

24. A color ink jet recording method according to claim 21, wherein $X = 2$.

25. A color ink jet recording method according to claim 21, wherein $X = 2\sqrt{2}$.

26. A color ink jet recording method according to claim 19, wherein said discriminating step is adapted to effect the discrimination only on the character code data within the black image area, and said determining step is adapted to determine that the black image area composed of bit image data etc. is formed with the color inks of said plural colors.

27. A color ink jet recording method according to claim 19, wherein said discriminating step is adapted to effect the discrimination only within an extent of the black image area stored in a memory, and said determining step is adapted to determine that other black image areas are formed with the color inks of said plural colors.

28. A color ink jet recording method according to claim 19, wherein the color inks of said plural colors are of yellow, magenta and cyan colors or of green, red and blue colors.

29. A color ink jet recording method according to any of claims 19 to 28, wherein said inks are discharged by thermal energy.

30. A color ink jet recording method for forming a desired color image on a recording medium by discharging inks thereon, comprising steps of:

forming an image with a black ink; and

forming an image with color inks of plural colors, different from said black ink;

discriminating whether a color image area is present adjacent to a black image area; and

determining whether said black image area is formed with said black ink or with the color inks of said plural colors, according to the result of said discrimination;

wherein the blotting rate, represented by the following formula:

$$A = B/C$$

wherein

A: blotting rate;

B: diameter (μm) of a single dot formed on quality paper; and

C: diameter (μm) of a discharged single ink droplet, is smaller in said black ink than in said color inks.

31. A color ink jet recording method according to claim 30, wherein said black image area is formed with said black ink in case the periphery of said black image area is not adjacent to a color image area, and said black image area is formed with the color inks of said plural colors in case at least a part of the periphery of said black image area is adjacent to a color image area.

32. A color ink jet recording method according to claim 31, wherein the periphery of said black image area is discriminated to be adjacent to a color image area, in case at least a color recording pixel, constituting said color image area, is present in a position within a range $X \cdot P$ ($4\sqrt{2} \geqq X \geqq 1$) with respect to at least a black recording pixel constituting the black image area on the recording medium, wherein P is the minimum pixel recording pitch.

33. A color ink jet recording method according to claim 32, wherein $X = 1$.

34. A color ink jet recording method according to claim 32, wherein $X = \sqrt{2}$.

35. A color ink jet recording method according to claim 32, wherein $X = 2$.

36. A color ink jet recording method according to claim 32, wherein $X = 2\sqrt{2}$.

37. A color ink jet recording method according to claim 30, wherein the blotting rate is within a range of 1.2 to 2.5 for the black ink and within a range of 1.8 to 3.5 for the color inks.

38. A color ink jet recording method according to claim 37, wherein said ink contains at least one of a surfactant and a penetrating solvent.

39. A color ink jet recording method according to claim 38, wherein the surfactant added to said ink is an ionic surfactant, a nonionic surfactant, an amphoteric surfactant or a mixture of at least two thereof.

40. A color ink jet recording method according to claim 39, wherein the surfactant added to said ink is a nonionic surfactant.

41. A color ink jet recording method according to claim 39, wherein the surfactant added to said ink is at least one selected from ethylene oxide adducts of higher alcohols, ethylene oxide adducts of alkylphenols, ethylene oxide-propylene oxide copolymer, and ethylene oxide adducts of acetylene glycol.

42. A color ink jet recording method according to claim 38, wherein the penetrating solvent added to said ink is at least one compound selected from ethers, lower alkyl ethers of polyhydric alcohols, and monohydric alcohols.

43. A color ink jet recording method according to claim 30 wherein said discriminating step is adapted to effect the discrimination only on the character code data within the black image area, and said determining step is adapted to determine that the black image area composed of bit image data etc. is formed with the color inks of said plural colors.

44. A color ink jet recording method according to claim 30, wherein said discriminating step is adapted to effect the discrimination only within an extent of the black image area stored in a memory, and said determining step is adapted to determine that other black image areas are formed with the color inks of said plural colors.

45. A color ink jet recording method according to claim 30, wherein the color inks of said plural colors are of yellow, magenta and cyan colors or of green, red and blue colors.

46. A color ink jet recording method according to claim 30, wherein the fixing time for said black ink is longer than that for said color inks.

47. A color ink jet recording method according to any of claims 30 to 46, wherein said inks are discharge by thermal energy.

EP 0 580 449 B1

**Patentansprüche**

1. Farbabbildungsverfahren zum Erzeugen eines Farbbildes auf einem Aufzeichnungsmedium, umfassend die Schritte, daß

   • ein Bild unter Verwendung einer schwarzen Flüssigkeit mit einer Oberflächenspannungscharakteristik, die größer ist als diejenige mehrerer Farbflüssigkeiten, die in der Farbe von der schwarzen Flüssigkeit verschieden sind, gebildet wird und daß

   • ein Bild unter Verwendung der mehreren Farbflüssigkeiten gebildet wird,
   wobei der letztere Schritt eine vorbestimmte Breite schwarzer Bildpunkte an der Grenze der schwarzen Bildfläche erzeugt.

2. Farbabbildungsverfahren nach Anspruch 1, wobei die vorbestimmte Breite der Bildpunkte auch unter Verwendung der schwarzen Flüssigkeit gebildet wird.

3. Farbbildaufzeichnungsvorrichtung, umfassend

   • eine Flüssigstrahlaufzeichnungseinrichtung, die eingestellt ist, um auf ein Aufzeichnungsmedium eine schwarze Flüssigkeit und mehrere Flüssigkeiten mit verschiedenen Farben freizusetzen, wobei die schwarze Flüssigkeit ein größeres Diffusionsvermögen als die farbigen Flüssigkeiten und eine geringere Durchdringbarkeit als die farbigen Flüssigkeiten aufweist, und

   • eine Steuerungseinrichtung, die die Aufzeichnungseinrichtung veranlaßt, lediglich schwarze Flüssigkeit freizusetzen, um eine schwarze Fläche auf dem Aufzeichnungsmedium zu bilden, wenigstens eine Farbflüssigkeit freizusetzen, um eine nicht-schwarze Fläche auf dem Aufzeichnungsmedium zu bilden, und mehrere Farbflüssigkeiten freizusetzen, um eine schwarze Fläche mit einer vorbestimmten Breite der Bildpunkte an der Grenze zwischen der schwarzen Fläche und der nicht-schwarzen Fläche zu bilden.

4. Aufzeichnungsvorrichtung nach Anspruch 3, wobei die Steuerungseinrichtung so angeordnet ist, daß sie die Aufzeichnungseinrichtung veranlaßt, auch die schwarze Flüssigkeit in der vorbestimmten Breite an der Grenze freizusetzen.

5. Farbbildaufzeichnungsvorrichtung, umfassend

   • eine Flüssigstrahlaufzeichnungseinrichtung zum Freisetzen schwarzer und verschiedener Farbflüssigkeiten auf ein Aufzeichnungsmedium und

   • eine Einrichtung zum Zuführen von Aufzeichnungssignalen an die Aufzeichnungseinrichtung,
   wobei die Aufzeichnungssignalzufuhreinrichtung derartig eingestellt ist, daß sie der Aufzeichnungseinrichtung ein Signal zuführt, um eine Freisetzung lediglich der schwarzen Flüssigkeit mit einer Oberflächenspannungs- und Diffusionsvermögenscharakteristik, die größer ist als die der verschiedenen Farbflüssigkeiten, in einer schwarzen Zeichenfläche zu veranlassen, ein Signal, um in der nichtschwarzen Farbfläche eine Freisetzung einer davon verschiedenen Farbflüssigkeit mit einer gegenüber der schwarzen Flüssigkeit erhöhten Duchdringbarkeit zu veranlassen, und ein Signal, um die Freisetzung einer Vielzahl der verschiedenen Farbflüssigkeiten in einem schwarzen Bereich an der Grenze zwischen den schwarzen und den nicht-schwarzen Farbflächen zu veranlassen.

6. Aufzeichnungsvorrichtung nach Anspruch 5, wobei die Aufzeichnungssignalzufuhreinrichtung so eingestellt ist, daß sie der Aufzeichnungseinrichtung ein Signal zuführt, um eine Freisetzung der schwarzen Flüssigkeit in dem schwarzen Grenzbereich zu veranlassen.

7. Farbabbildungsverfahren zum Erzeugen eines Farbbildes auf einem Aufzeichnungsmedium mittels Flüssigkeiten von verschiedener Farbe, umfassend die Schritte, daß

   • ein Bild mit einer ersten Farbflüssigkeit mit einer Durchdringungszeit, vom Aufbringen auf dem Aufzeichnungsmedium bis zum abrupten Wechsel in der Menge des von der Oberfläche reflektierten Lichts gemessen, in der Größenordnung von 100 ms erzeugt wird und daß

36

- ein Bild mit einer zweiten Farbflüssigkeit mit einer Leuchtkraft, die niedriger ist als die der ersten Farbflüssigkeit, und einer Durchdringungszeit in der Größenordnung von Sekunden erzeugt wird, wobei die erste Farbflüssigkeit cyanblau, magenta oder gelb und die zweite Farbflüssigkeit schwarz ist.

8. Farbabbildungsverfahren zum Erzeugen eines Farbbildes auf einem Aufzeichnungsmedium, umfassend die Schritte, daß

- eine erste Bildfläche unter Verwendung lediglich einer schwarzen Flüssigkeit erzeugt wird und daß

- eine zweite Bildfläche mit einer Farbflüssigkeit, die in der Farbe von der schwarzen Flüssigkeit verschieden ist, in wenigstens einem Teil der Grenze der ersten Bildfläche erzeugt wird, wobei eine vorbestimmte Fläche der ersten Bildfläche, die der zweiten Bildfläche benachbart ist, unter Verwendung einer Mischung der von Schwarz verschiedenen Farbflüssigkeiten gebildet wird und wobei die schwarze Flüssigkeit eine überlegene Oberflächencharakteristik, bezogen auf die Farbflüssigkeiten, zeigt.

9. Farbbildaufzeichnungsvorrichtung, umfassend

- eine Tintenstrahlaufzeichnungseinrichtung, versehen mit einer Mehrzahl von Farbtinten-Auslaßeinheiten, die in der Rasterrichtung in einem vorbestimmten Abstand angeordnet sind, wobei das Aufzeichnungsintervall benachbarter Auslaßeinheiten in der Größenordnung von 10 ms liegt, und

- eine Einrichtung zur Bildung von Bildflächen auf einem Aufzeichnungsmedium unter Verwendung einer ersten Farbflüssigkeit mit einer Durchdringungszeit vom Aufbringen auf das Aufzeichnungsmedium zur abrupten Änderung in der Menge des von der Oberfläche reflektierten Lichts in der Größenordnung von 100 ms und einer zweiten Farbflüssigkeit mit einer Leuchtkraft, die niedriger ist als diejenige der ersten Farbflüssigkeit, und mit einer Durchdringungszeit in der Größenordnung von Sekunden, und eine Einrichtung zum Erzeugen einer Bildfläche mit lediglich der zweiten Farbflüssigkeit, die in der Farben von der ersten Farbflüssigkeit verschieden ist, in wenigstens einem Teil der Grenze der mit lediglich der ersten Farbflüssigkeit zu erzeugenden Bildfläche.

10. Farbtintenstrahlaufzeichnungsverfahren zum Erzeugen eines Farbbildes auf einem Aufzeichnungsmedium unter Verwendung schwarzer und farbiger Tinten von mehreren Farben, die von der schwarzen Tinte verschieden sind, wobei die schwarze Tinte überlegene oberflächenaktive Eigenschaften in Bezug auf die Farbtinten zeigt, das Verfahren umfassend die Schritte, daß

- unterschieden wird, ob ein Farbbild einem schwarzen Bild benachbart vorliegt, und daß

- das schwarze Bild so erzeugt wird, daß wenigstens ein Bereich mit einer vorbestimmten Breite von Bildpunkten der schwarzen Bildfläche, die der zwischen dem schwarzen Bild und dem Farbbild zu erzeugenden Grenze benachbart ist, mittels Bildpunkten von schwarzer Farbe und Bildpunkten von farbiger Farbe erzeugt wird, welche durch Punkte erzeugt werden, die aus mit einer Farbtinte gebildeten und mit wenigstens zwei Farbtinten gebildeten Punkten erzeugt sind.

11. Farbtintenstrahlaufzeichnungsverfahren nach Anspruch 10, wobei das schwarze Bild mit der schwarzen Tinte erzeugt wird, wo die Peripherie des schwarzen Bildes nicht dem Farbbild benachbart benachbart sein soll, und das schwarze Bild mit den Farbtinten der mehreren Farben und Schwarz erzeugt wird, wo wenigstens ein Teil der Peripherie des schwarzen Bildes dem Farbbild benachbart sein soll.

12. Farbtintenstrahlaufzeichnungsverfahren nach Anspruch 10, wobei das schwarze Bild dort mit der schwarzen Tinte erzeugt wird, wo die Peripherie des schwarzen Bildes nicht einem Farbbild benachbart sein soll oder wo wenigstens ein Teil dieser Peripherie einem Farbbild benachbart sein soll, jedoch das schwarze Bild mit den farbigen Tinten mehrerer Farben und Schwarz erzeugt wird, wo die gesamte Peripherie des schwarzen Bildes einem Farbbild benachbart sein soll.

13. Farbtintenstrahlaufzeichnungsverfahren nach Anspruch 10, wobei der Unterscheidungsschritt eingestellt ist zu veranlassen, daß ein Teil des schwarzen Bildes mit der schwarzen Tinte erzeugt wird und der Rest mit den Farbtinten mehrerer Farben und Schwarz dort, wenn wenigstens ein Teil der Peripherie des schwarzen Bildes einem Farbbild benachbart sein soll, erzeugt wird.

14. Farbtintenstrahlaufzeichnungsvorrichtung, umfassend

- einen Aufzeichnungskopf für schwarze Tinte zum Freisetzen schwarzer Tinte;

- Mehrfarbentintenaufzeichnungsköpfe zum Freisetzen farbiger Tinten mit von der schwarzen Tinte verschiedener Farbe, wobei die schwarze Tinte überlegene oberflächenaktive Eigenschaften in Bezug auf die Farbtinten aufweist;

- eine Einrichtung zum Zuführen von Aufzeichnungssignalen an den Aufzeichnungskopf für die schwarze Tinte und an die Aufzeichnungsköpfe für farbige Tinte;

- eine Unterscheidungseinrichtung zum Unterscheiden, ob ein schwarzes Bild einem Farbbild benachbart gebildet werden soll; und

- Aufzeichnungskopfsteuerungseinrichtung, um Tinten mit von Schwarz abweichender Farbe in einer vorbestimmten Breite von Bildpunkten in einer Grenzfläche zwischen einem schwarzen Bild und einem Farbbild gemäß dem Ergebnis der Unterscheidung mit der Unterscheidungseinrichtung freizusetzen, um so die Grenzfläche mit Punkten, die mit einer Farbtinte gebildet sind, und Punkten, die mit wenigstens zwei Farbtinten gebildet sind, zu erzeugen.

15. Vorrichtung nach Anspruch 14, des weiteren umfassend einen Puffer zum Speichern von Bilddaten für Schwarz, um das schwarze Bild zu erzeugen, wobei zwischen den Bilddaten für Schwarz Zeichencodedaten in einem Puffer für die schwarze Tinte gespeichert werden, während die Bit-Bilddaten in Puffern für die Farbtinten der mehreren Farben gespeichert werden.

16. Vorrichtung nach Anspruch 15, wobei die Zufuhreinrichtung so eingestellt ist, daß beim Drucken der Zeichencodedaten dem Aufzeichnungskopf für schwarze Tinte für den Fall, daß andere Daten in den Puffern für Farbtinten abwesend sind, ein Aufzeichnungssignal zum Freisetzen der schwarzen Tinte in denselben oder den der Druckposition für die Zeichencodedaten benachbarten Bildpunkten zugeführt wird, daß jedoch im Falle, daß solche Daten vorhanden sind, den Farbtintenaufzeichnungsköpfen Aufzeichnungssignale zum Freisetzen der Farbtinten zugeführt werden.

17. Vorrichtung nach Anspruch 15, wobei die Zufuhreinrichtung beim Drucken der Bit-Bilddaten so eingestellt ist, daß den Farbtintenaufzeichnungsköpfen Aufzeichnungsignale zum Freisetzen von Farbtinten für den Fall zugeführt werden, daß die in den Puffern für die Farbtinten der mehreren Farben gespeicherten Daten zwischen verschiedenen Farben wechselseitig verschieden sind, daß jedoch für den Fall, daß die Daten wechselseitig gleich sind, dem Aufzeichnungskopf für die schwarze Farbe ein Aufzeichnungssignal zum Freisetzen der schwarzen Tinte zugeführt wird.

18. Vorrichtung nach einem der Ansprüche 10 bis 17, wobei die Farbtinten der mehreren Farben Gelb, Magenta und Cyanblau sind.

19. Farbtintenstrahlaufzeichnungsverfahren zum Aufzeichnen eines Farbbildes auf einem Aufzeichnungsmedium mittels Freisetzen von Tinte darauf, umfassend die Schritte, daß

- ein Bild mit einer schwarzen Tinte erzeugt wird, daß

- ein Bild mit Farbtinten mehrerer Farben, welche von der schwarzen Tinte verschieden sind, erzeugt wird, daß

- unterschieden wird, ob eine einer schwarzen Bildfläche benachbarte Farbbildfäche vorhanden ist, und daß

- gemäß dem Ergebnis der Unterscheidung festgelegt wird, ob die schwarze Bildfäche mit der schwarzen Tinte oder mit den Farbtinten der mehreren Farben erzeugt wird,
wobei die Penetrationsgeschwindigkeit der schwarzen Tinte in das Aufzeichnungsmedium niedriger als diejenige der Farbtinten der mehreren Farben ist.

20. Farbtintenstrahlaufzeichnungsverfahren nach Anspruch 19, wobei der Festlegungsschritt eingestellt ist, um festzulegen, daß die schwarze Bildfläche mit der schwarzen Tinte in dem Falle erzeugt wird, in dem die schwarze Bildfläche einer Farbbildfläche nicht benachbart ist, und daß die schwarze Bildfläche mit den Farbtinten der mehreren Farben in dem Falle erzeugt wird, in dem wenigstens ein Teil der Peripherie der schwarzen Bildfäche einer Farbbildfläche benachbart ist.

21. Farbtintenstrahlaufzeichnungsverfahren nach Anspruch 20, wobei der Unterscheidungsschritt eingestellt ist, um zu identifizieren daß die Peripherie der schwarzen Bildfäche einer Farbbildfäche in dem Falle, daß wenigstens ein Farbaufzeichnungs-Bildpunkt, der die Farbbildfläche konstituiert, in einer Aufzeichnungsposition innerhalb von X • P (4√2 = X = 1) in Bezug auf wenigstens einen schwarzen Aufzeichnungsbildpunkt, der die schwarze Bildfläche auf den Aufzeichnungsmedium konstituiert, wobei P der Minimalbildpunktrasterabstand beim Aufzeichnen ist, vorhanden ist.

22. Farbtintenstrahlaufzeichnungsverfahren nach Anspruch 21, wobei X = 1 ist.

23. Farbtintenstrahlaufzeichnungsverfahren nach Anspruch 21, wobei X = √2 ist.

24. Farbtintenstrahlaufzeichnungsverfahren nach Anspruch 21, wobei X = 2 ist.

25. Farbtintenstrahlaufzeichnungsverfahren nach Anspruch 21, wobei X = 2√2 ist.

26. Farbtintenstrahlaufzeichnungsverfahren nach Anspruch 19, wobei der Unterscheidungsschritt so eingestellt ist, daß die Unterscheidung lediglich die Zeichencodedaten innerhalb der schwarzen Bildfläche betrifft, und der Festlegungsschritt so eingestellt ist, daß die schwarze Bildfläche, welche aus Bit-Bilddaten und dergleichen zusammengesetzt ist, mit den Farbtinten der mehreren Farben gebildet wird.

27. Farbtintenstrahlaufzeichnungsverfahren nach Anspruch 19, wobei der Unterscheidungsschritt so eingestellt ist, daß die Unterscheidung lediglich im Umfang der in einem Speicher gespeicherten schwarzen Bildfläche bewirkt wird, und daß der Festlegungsschritt eingestellt ist, um festzulegen, daß die anderen schwarzen Bildflächen mit den Farbtinten der mehreren Farben erzeugt werden.

28. Farbtintenstrahlaufzeichnungsverfahren nach Anspruch 19, wobei die Farbtinten der mehreren Farben die Farben Gelb, Magenta und Cyanblau oder die Farben Grün, Rot und Blau sind.

29. Farbtintenstrahlaufzeichnungsverfahren nach einem der Ansprüche 19 bis 28, wobei die Tinten mittels thermischer Energie freigesetzt werden.

30. Farbtintenstrahlaufzeichnungsverfahren zum Erzeugen eines gewünschten Farbbildes auf einem Aufzeichnungsmedium mittels Freisetzung von Tinten darauf, umfassend die Schritte, daß

• ein Bild mit einer schwarzen Tinte erzeugt wird und daß

• ein Bild mit Farbtinten einer Mehrzahl von Farben, welche von der schwarzen Tinte verschieden sind, erzeugt wird, daß

• unterschieden wird, ob eine farbige Bildfläche einer schwarzen Bildfläche benachbart ist, und daß

• festgelegt wird, ob die schwarze Bildfläche mit der schwarzen Tinte oder mit den farbigen Tinten der Mehrzahl von Farben gemäß dem Ergebnis der Unterscheidung erzeugt wird;
wobei die Fleck-Auftragsrate, dargestellt durch die folgende Formel:

$$A=B/C,$$

wobei

A: die Fleck-Auftragsrate;
B: der Durchmesser ($\mu$m) eines einzelnen auf einem Qualitätspapier gebildeten Punktes und
C: der Durchmesser ($\mu$m) eines freigesetzten Einzeltintentropfens sind,

in der schwarzen Tinte kleiner als in den Farbtinten ist.

**31.** Farbtintenstrahlaufzeichnungsverfahren nach Anspruch 30, wobei die schwarze Bildfläche im Falle, daß die Peripherie der schwarzen Bildfläche einer Farbbildfläche nicht benachbart ist, mit der schwarzen Tinte erzeugt wird und wobei die schwarze Bildfläche mit den Farbtinten der mehreren Farben in dem Fall erzeugt wird, daß wenigstens ein Teil der Peripherie der schwarzen Bildfläche einer Farbbildfläche benachbart ist.

**32.** Farbtintenstrahlaufzeichnungsverfahren nach Anspruch 31, wobei die Peripherie der schwarzen Bildfläche im Falle, daß wenigstens ein Farbaufzeichnungsbildpunkt, der die Farbbildfläche konstituiert, in einer Position innerhalb eines Bereichs von $X \cdot P$ $(4\sqrt{2} = X = 1)$ in Bezug zu wenigstens einem schwarzen Aufzeichnungsbildpunkt, der die schwarze Bildfläche auf dem Aufzeichnungsmedium konstituiert, wobei $P$ der Minimalbildpunktaufzeichnungsrasterabstand ist, vorhanden ist.

**33.** Farbtintenstrahlaufzeichnungsverfahren nach Anspruch 32, wobei $X = 1$ ist.

**34.** Farbtintenstrahlaufzeichnungsverfahren nach Anspruch 32, wobei $X = \sqrt{2}$ ist.

**35.** Farbtintenstrahlaufzeichnungsverfahren nach Anspruch 32, wobei $X = 2$ ist.

**36.** Farbtintenstrahlaufzeichnungsverfahren nach Anspruch 32, wobei $X = 2\sqrt{2}$ ist.

**37.** Farbtintenstrahlaufzeichnungsverfahren nach Anspruch 30, wobei die Auftropfrate für die schwarze Tinte im Bereich von 1,2 bis 2,5 und für die Farbtinten im Bereich von 1,8 bis 3,5 liegt.

**38.** Farbtintenstrahlaufzeichnungsverfahren nach Anspruch 37, wobei die Tinte wenigstens ein oberflächenaktives Mittel und ein Durchdringungslösungsmittel enthält.

**39.** Farbtintenstrahlaufzeichnungsverfahren nach Anspruch 38, wobei das der Tinte zugesetzte oberflächenaktive Mittel ein ionisches, nicht-ionisches oder ein amphoteres oberflächenaktives Mittel oder eine Mischung von wenigstens zweien davon ist.

**40.** Farbtintenstrahlaufzeichnungsverfahren nach Anspruch 39, wobei das der Tinte zugesetzte oberflächenaktive Mittel ein nicht-ionisches oberflächenaktives Mittel ist.

**41.** Farbtintenstrahlaufzeichnungsverfahren nach Anspruch 39, wobei das der Tinte hinzugefügte oberflächenaktive Mittel wenigstens eines aus der Gruppe der Ethylenoxidaddukte von höheren Alkoholen, der Ethylenoxidaddukte von Alkylphenolen, der Copolymere aus Ethylenoxid und Propylenoxid und der Ethylenoxidaddukte von Acetylenglycol ist.

**42.** Farbtintenstrahlaufzeichnungsverfahren nach Anspruch 38, wobei das der Tinte hinzugefügte Durchdringungslösungsmittel wenigstens eine Verbindung ist, ausgewählt aus Ethern, niederen Alkylethern mehrwertiger Alkohole und einwertigen Alkoholen.

**43.** Farbtintenstrahlaufzeichnungsverfahren nach Anspruch 30, wobei der Unterscheidungsschritt eingestellt ist, um die Unterscheidung lediglich für die Zeichencodedaten innerhalb der schwarzen Bildfläche zu bewirken, und der Festlegungsschritt eingestellt ist, um festzulegen, daß die schwarze Bildfläche, die aus Bit-Bilddaten und dergleichen zusammengesetzt ist, mit den Farbtinten der mehreren Farben gebildet wird.

**44.** Farbtintenstrahlaufzeichnungsverfahren nach Anspruch 30, wobei der Unterscheidungsschritt eingestellt ist, um die Unterscheidung lediglich im Umfang der in einem Speicher gespeicherten schwarzen Bildfläche zu bewirken, und daß der Festlegungsschritt eingestellt ist, um festzulegen, daß andere schwarze Bildflächen mit den Farbtinten der mehreren Farben gebildet werden.

**45.** Farbtintenstrahlaufzeichnungsverfahren nach Anspruch 30, wobei die Farbtinten der mehreren Farben aus Gelb-, Magenta- und Cyanblau-Farben oder aus Grün-, Rot- oder Blau-Farben gebildet sind.

**46.** Farbtintenstrahlaufzeichnungsverfahren nach Anspruch 30, wobei die Fixierzeit für die schwarze Tinte länger ist als für die Farbtinten.

**47.** Farbtintenstrahlaufzeichnungsverfahren nach einem der Ansprüche 30 bis 46, wobei die Tinten mittels thermischer Energie freigesetzt werden.

**Revendications**

1.  Procédé de formation d'images en couleurs pour la formation d'une image en couleurs sur un support d'enregistrement, comprenant les étapes consistant :

    à former une image en utilisant un liquide noir ayant des caractéristiques de tension superficielle supérieures à celles d'une pluralité de liquides colorés ayant des couleurs différentes de celle dudit liquide noir ; et
    à former une image utilisant ladite pluralité de liquides colorés ;
    dans lequel cette dernière étape forme une largeur prédéterminée de pixels d'image noire à la limite de la zone de l'image noire.

2.  Procédé de formation d'images en couleurs suivant la revendication 1, dans lequel la largeur prédéterminée de pixels est formée également en utilisant le liquide noir.

3.  Appareil d'enregistrement d'images en couleurs, comprenant :

    un moyen d'enregistrement par jets de liquide apte à décharger sur un support d'enregistrement un liquide noir et une pluralité de liquides de couleurs différentes, ledit liquide noir ayant une diffusibilité supérieure à celle des liquides colorés et une pénétrabilité inférieure à celle des liquides colorés ; et
    un moyen de commande pour amener ledit moyen d'enregistrement à décharger le liquide noir seul afin de former une zone noire sur le support d'enregistrement, à décharger au moins un liquide coloré pour former une zone non noire sur le support d'enregistrement, et à décharger une pluralité de liquides colorés pour former une zone noire d'une largeur prédéterminée de pixels à la limite entre la zone noire et la zone non noire.

4.  Appareil d'enregistrement suivant la revendication 3, dans lequel le moyen de commande est disposé de manière à amener le moyen d'enregistrement à décharger également le liquide noir dans la largeur prédéterminée à la limite.

5.  Appareil d'enregistrement d'images en couleurs, comprenant :

    un moyen d'enregistrement par jets de liquide pour décharger un liquide de couleur noire et des liquides de couleurs différentes sur un support d'enregistrement ; et
    un moyen pour fournir audit moyen d'enregistrement des signaux d'enregistrement ;
    dans lequel ledit moyen fournissant des signaux d'enregistrement est apte à fournir audit moyen d'enregistrement un signal pour provoquer la décharge du liquide noir seulement ayant des caractéristiques de tension superficielle et de diffusibilité supérieures à celles desdits liquides de couleurs différentes dans une zone de caractères de couleur noire, un signal pour provoquer le déchargement d'un liquide de couleurs différentes ayant une pénétrabilité supérieure à celle dudit liquide noir dans une zone de couleur non noire, et un signal pour provoquer le déchargement d'une pluralité desdits liquides de couleurs différentes dans une région noire à la limite entre lesdites zones de couleur noire et de couleurs non noires.

6.  Appareil d'enregistrement suivant la revendication 5, dans lequel le moyen fournissant des signaux d'enregistrement est apte à fournir audit moyen d'enregistrement un signal pour provoquer le déchargement du liquide noir dans la zone limite de couleur noire.

7.  Procédé de formation d'images en couleurs pour la formation d'une image en couleurs sur un support d'enregistrement au moyen de liquides de couleurs différentes, comprenant les étapes consistant :

    à former une image avec un premier liquide coloré ayant un temps de pénétration, depuis le dépôt sur le support d'enregistrement jusqu'à la variation brutale de la quantité de lumière réfléchie en surface, de l'ordre de 100 ms ; et
    à former une image avec un second liquide coloré ayant une luminosité inférieure à celle dudit premier liquide coloré et un temps de pénétration de l'ordre d'une seconde, dans lequel ledit premier liquide coloré est un liquide de couleur cyan, magenta ou jaune et ledit second liquide coloré est un liquide de couleur noire.

8.  Procédé de formation d'images en couleurs pour la formation d'une image en couleurs sur un support d'enregistrement, comprenant les étapes consistant :

à former une première zone d'image utilisant un liquide noir seulement ; et

à former une seconde zone d'image avec un liquide coloré ayant une couleur différente de celle dudit liquide noir, dans au moins une partie de la limite de ladite première zone d'image dans laquelle une zone prédéterminée de la première zone d'image adjacente à la seconde zone d'image est formée en utilisant un mélange de liquides colorés autre que le liquide de couleur noire ; et dans lequel ledit liquide noir a des caractéristiques de surface supérieures à celles desdits liquides colorés.

9. Appareil d'enregistrement d'images en couleurs, comprenant :

un moyen d'enregistrement par jets d'encre muni d'une pluralité d'unités de déchargement d'encres de couleur disposées à un pas prédéterminé dans une direction de balayage, ledit intervalle d'enregistrement des unités de déchargement adjacentes étant de l'ordre de 10 ms ; et

un moyen pour former des zones d'image sur un support d'enregistrement en utilisant un premier liquide coloré ayant un temps de pénétration, depuis le dépôt sur le support d'enregistrement jusqu'à la variation brutale de la quantité de lumière réfléchie en surface, de l'ordre de 100 ms et un second liquide coloré ayant une luminosité inférieure à celle dudit premier liquide coloré et ayant un temps de pénétration de l'ordre d'une seconde, et un moyen pour former une zone d'image avec le second liquide coloré seulement, ayant une couleur différente de celle dudit premier liquide coloré, dans au moins une partie de la limite de la zone d'image à former avec ledit premier liquide coloré seulement.

10. Procédé d'enregistrement par jets d'encre en couleurs pour la formation d'une image en couleurs sur un support d'enregistrement en utilisant une encre noire et des encres colorées d'une pluralité de couleurs différentes de celle de ladite encre noire, ladite encre noire ayant des caractéristiques d'activité de surface supérieures à celles desdites encres colorées, procédé qui comprend les étapes consistant :

à discriminer si une image en couleur doit être présente en position adjacente à une image noire : et

à former ladite image noire de telle sorte qu'au moins une région d'une largeur prédéterminée de pixels de ladite zone d'image noire adjacente à la limite à former entre l'image noire et l'image en couleurs soit formée par des pixels d'encre noire et des pixels d'encres de couleurs formés par des points formés d'une encre colorée et des points formés par au moins deux encres colorées.

11. Procédé d'enregistrement par jets d'encre en couleurs suivant la revendication 10, dans lequel l'image noire est formée avec l'encre noire lorsque la périphérie de ladite image noire ne doit pas être adjacente à une image en couleurs, et ladite image noire est formée avec lesdites encres colorées d'une pluralité de couleurs et de couleur noire lorsqu'au moins une partie de la périphérie de ladite image noire doit être adjacente à une image en couleurs.

12. Procédé d'enregistrement par jets d'encre en couleurs suivant la revendication 10, dans lequel l'image noire est formée avec ladite encre noire lorsque la périphérie de ladite image noire ne doit pas être adjacente à une image en couleurs ou lorsqu'au moins une partie de ladite périphérie doit être adjacente à une image en couleurs, mais ladite image noire est formée avec lesdites encres colorées d'une pluralité de couleurs et de couleur noire lorsque la totalité de la périphérie de ladite image noire doit être adjacente à une image en couleurs.

13. Procédé d'enregistrement par jets d'encre en couleurs suivant la revendication 10, dans lequel l'étape de discrimination est apte à provoquer la formation d'une partie de ladite image noire avec l'encre noire et la formation du reste avec lesdites encres colorées d'une pluralité de couleurs et de couleur noire lorsqu'au moins une partie de la périphérie de ladite image noire doit être adjacente à une image en couleurs.

14. Appareil d'enregistrement par jets d'encre en couleurs, comprenant :

une tête d'enregistrement à encre noire pour le déchargement d'une encre noire ;

une pluralité de têtes d'enregistrement à encres colorées pour le déchargement d'encres colorées ayant une couleur différente de celle de ladite encre noire, ladite encre noire ayant des caractéristiques d'activité de surface supérieures à celles desdites encres colorées ;

un moyen pour fournir à ladite tête d'enregistrement à encre noire et auxdites têtes d'enregistrement à encres colorées des signaux d'enregistrement ;

un moyen de discrimination pour discriminer si une image noire doit être formée en position adjacente à une image en couleurs ; et

un moyen pour commander lesdites têtes d'enregistrement de manière à décharger des encres desdites couleurs autres que la couleur noire dans une largeur prédéterminée de pixels dans une zone limite entre une image noire et une image en couleurs en fonction du résultat de la discrimination par ledit moyen de discrimination de manière à former ladite zone limite avec des points formés d'une encre colorée et des points formés d'au moins deux encres colorées.

15. Appareil suivant la revendication 14, comprenant en outre un tampon pour le stockage de données d'image noire afin de former ladite image noire, dans lequel, parmi lesdites données d'image noire, des données de codes de caractères sont stockées dans un tampon pour l'encre noire, tandis que les données d'images binaires sont stockées dans des tampons pour les encres colorées de plusieurs couleurs.

16. Appareil suivant la revendication 15, dans lequel le moyen de distribution est apte, lors de l'impression de données de codes de caractères, à fournir à la tête d'enregistrement à encre noire un signal d'enregistrement pour le déchargement de l'encre noire, dans le cas où des données d'une autre couleur sont absentes, dans lesdits tampons d'encres colorées, dans les pixels identiques ou adjacents à la position d'impression desdites données de codes de caractères, mais pour fournir aux têtes d'enregistrement à encres colorées des signaux d'enregistrement pour le déchargement des encres colorées dans le cas où ces données sont présentes.

17. Appareil suivant la revendication 15, dans lequel le moyen de distribution est apte, lors de l'impression des données d'images binaires, à fournir aux têtes d'enregistrement à encres colorées des signaux d'enregistrement pour le déchargement d'encres colorées dans le cas où les données, stockées dans les tampons pour les encres colorées de plusieurs couleurs, sont mutuellement différentes parmi des couleurs différentes, mais pour fournir à ladite tête d'enregistrement à encre noire un signal d'enregistrement pour le déchargement de l'encre noire dans le cas où lesdites données sont identiques.

18. Appareil suivant l'une quelconque des revendications 10 à 17, dans lequel les encres colorées de plusieurs couleurs sont de couleurs jaune, magenta et cyan.

19. Procédé d'enregistrement par jets d'encre en couleurs pour la formation d'une image en couleurs sur un support d'enregistrement en déchargeant des encres sur ce support, comprenant les étapes consistant :

à former une image avec une encre noire ; et
à former une image avec des encres colorées de plusieurs couleurs, différentes de la couleur de ladite encre noire ;
à discriminer si une zone d'images en couleurs est présente en position adjacente à une zone d'image noire ;
à déterminer si ladite zone d'image noire est formée avec ladite encre noire, ou avec les encres colorées de ladite pluralité de couleurs, en fonction du résultat de ladite discrimination ;
dans lequel la vitesse de pénétration de ladite encre noire dans le support d'enregistrement est inférieure à celle des encres colorées de plusieurs couleurs.

20. Procédé d'enregistrement par jets d'encre en couleurs suivant la revendication 19, dans lequel l'étape de détermination est apte à déterminer si la zone d'image noire est formée avec ladite encre noire dans le cas où ladite zone d'image noire n'est pas adjacente à une zone d'images en couleurs, et si ladite zone d'image noire est formée avec les encres colorées de ladite pluralité de couleurs dans le cas où au moins une partie de la périphérie de ladite zone d'image noire est adjacente à une zone d'images en couleurs.

21. Procédé d'enregistrement par jets d'encre en couleurs suivant la revendication 20, dans lequel l'étape de discrimination est apte à identifier si la périphérie de la zone d'image noire est adjacente à une zone d'images en couleurs, dans le cas où au moins un pixel d'enregistrement en couleurs, constituant la zone d'images en couleurs, est présent à une position d'enregistrement dans les limites de X.P $4\sqrt{2} \geq X \geq 1$), par rapport à au moins un pixel d'enregistrement de couleur noire constituant la zone d'image noire sur le support d'enregistrement, P désignant le pas de pixel minimal lors de l'enregistrement.

22. Procédé d'enregistrement par jets d'encre en couleurs suivant la revendication 21, dans lequel X = 1.

23. Procédé d'enregistrement par jets d'encre en couleurs suivant la revendication 21, dans lequel X = $\sqrt{2}$.

**24.** Procédé d'enregistrement par jets d'encre en couleurs suivant la revendication 21, dans lequel X = 2.

**25.** Procédé d'enregistrement par jets d'encre en couleurs suivant la revendication 21, dans laquel X = 2√2.

**26.** Procédé d'enregistrement par jets d'encre en couleurs suivant la revendication 19, dans lequel l'étape de discrimination est apte à effectuer la discrimination seulement des données de codes de caractères dans la zone d'image noire, et l'étape de détermination est apte à déterminer si la zone d'image noire constituée de données d'images binaires, etc., est formée avec les encres colorées de plusieurs couleurs.

**27.** Procédé d'enregistrement par jets d'encre en couleurs suivant la revendication 19, dans lequel l'étape de discrimination est apte à effectuer une discrimination seulement dans la mesure où la zone d'image noire est stockée dans une mémoire, et l'étape de discrimination est apte à déterminer si d'autres zones d'images noires sont formées avec les encres colorées de plusieurs couleurs.

**28.** Procédé d'enregistrement par jets d'encre en couleurs suivant la revendication 19, dans lequel les encres colorées desdites plusieurs couleurs sont des encres de couleurs jaune, magenta et cyan ou de couleurs verte, rouge et bleue.

**29.** Procédé d'enregistrement par jets d'encre en couleurs suivant l'une quelconque des revendications 19 à 28, dans lequel les encres sont déchargées sous l'action d'énergie thermique.

**30.** Procédé d'enregistrement par jets d'encre en couleurs pour la formation d'une image en couleurs désirée sur un support d'enregistrement par déchargement d'encres sur ce support, comprenant les étapes consistant :

à former une image avec une encre noire ; et
à former une image avec des encres colorées de plusieurs couleurs, différentes de celle de ladite encre noire ;
à discriminer si une zone d'images en couleurs est présente en position adjacente à une zone d'image noire ; et
à déterminer si ladite zone d'image noire est formée avec ladite encre noire ou avec les encres colorées desdites plusieurs couleurs, en fonction du résultat de ladite discrimination ;
dans lequel le taux de maculage, représenté par la formule suivante :

$$A = B/C$$

dans laquelle

A : vitesse de projection ;
B : diamètre ($\mu$m) d'un seul point formé sur du papier de qualité ; et
C : diamètre ($\mu$m) d'une seule gouttelette d'encre déchargée,

est inférieur dans le cas de ladite encre noire à celui des encres colorées.

**31.** Procédé d'enregistrement par jets d'encre en couleurs suivant la revendication 30, dans lequel la zone d'image noire est formée avec l'encre noire dans le cas où la périphérie de la zone d'image noire n'est pas adjacente à une zone d'images en couleurs, et la zone d'image noire est formée avec les encres colorées desdites plusieurs couleurs dans le cas où au moins une partie de la périphérie de ladite zone d'image noire est adjacente à une zone d'images en couleurs.

**32.** Procédé d'enregistrement par jets d'encre en couleurs suivant la revendication 31, dans lequel la périphérie de la zone d'image noire est discriminée comme étant adjacente à une zone d'images en couleurs, dans le cas où au moins un pixel d'enregistrement en couleurs, constituant ladite zone d'images en couleurs, est présent à une position dans l'intervalle X.P 4√2 ≥ X ≥ 1), par rapport à au moins un pixel d'enregistrement de couleur noire constituant la zone d'image noire sur le support d'enregistrement, P désignant le pas minimal d'enregistrement de pixel.

**33.** Procédé d'enregistrement par jets d'encre en couleurs suivant la revendication 32, dans lequel X = 1.

**34.** Procédé d'enregistrement par jets d'encre en couleurs suivant la revendication 32, dans lequel X = √2.

**35.** Procédé d'enregistrement par jets d'encre en couleurs suivant la revendication 32, dans lequel X = 2.

**36.** Procédé d'enregistrement par jets d'encre en couleurs suivant la revendication 32, dans laquel X = 2√2.

**37.** Procédé d'enregistrement par jets d'encre en couleurs suivant la revendication 30, dans lequel le taux de maculage est compris dans l'intervalle de 1,2 à 2,5 pour l'encre noire et dans l'intervalle de 1,8 à 3,5 pour les encres colorées.

**38.** Procédé d'enregistrement par jets d'encre en couleurs suivant la revendication 37, dans lequel l'encre contient au moins un des agents consistant en un surfactant et un solvant pénétrant.

**39.** Procédé d'enregistrement par jets d'encre en couleurs suivant la revendication 38, dans lequel le surfactant ajouté à l'encre est un surfactant ionique, un surfactant non ionique, un surfactant amphotère ou un mélange d'au moins deux de ces surfactants.

**40.** Procédé d'enregistrement par jets d'encre en couleurs suivant la revendication 39, dans lequel le surfactant ajouté à l'encre est un surfactant non ionique.

**41.** Procédé d'enregistrement par jets d'encre en couleurs suivant la revendication 39, dans lequel le surfactant ajouté à l'encre consiste en au moins un surfactant choisi entre des produits d'addition d'oxyde d'éthylène sur des alcools supérieurs, des produits d'addition d'oxyde d'éthylène sur des alkylphénols, un copolymère oxyde d'éthylène-oxyde de propylène, et des produits d'addition d'oxyde d'éthylène sur l'acétylène-glycol.

**42.** Procédé d'enregistrement par jets d'encre en couleurs suivant la revendication 38, dans lequel le solvant de pénétration ajouté à l'encre consiste en au moins un composé choisi entre des éthers, des éthers alkyliques inférieurs d'alcools polyhydroxyliques, et des alcools monohydroxyliques.

**43.** Procédé d'enregistrement par jets d'encre en couleurs suivant la revendication 30, dans lequel l'étape de discrimination est apte à effectuer la discrimination seulement des données de codes de caractères dans la zone d'image noire, et l'étape de détermination est apte à déterminer si la zone d'image noire constituée de données d'images binaires, etc., est formée avec les encres colorées de plusieurs couleurs.

**44.** Procédé d'enregistrement par jets d'encre en couleurs suivant la revendication 30, dans lequel l'étape de discrimination est apte à effectuer la discrimination seulement dans la mesure où la zone d'image noire est stockée dans une mémoire, et l'étape de détermination est apte à déterminer si d'autres zones d'image noire sont formées avec les encres colorées de plusieurs couleurs.

**45.** Procédé d'enregistrement par jets d'encre en couleurs suivant la revendication 30, dans lequel les encres colorées desdites plusieurs couleurs sont des encres de couleurs jaune, magenta et cyan ou de couleurs verte, rouge et bleue.

**46.** Procédé d'enregistrement par jets d'encre en couleurs suivant la revendication 30, dans lequel le temps de fixage de l'encre noire est supérieur à celui des encres colorées.

**47.** Procédé d'enregistrement par jets d'encre en couleurs suivant l'une quelconque des revendications 30 à 46, dans lequel les encres sont déchargées sous l'action d'énergie thermique.

FIG. 1

# FIG. 2

# FIG. 3

# FIG. 4

# FIG. 5

FIG. 6

FIG. 7B

207

208

204

Y

M

C

Br

FIG. 7A

208

204

205

206

201

202

203

## FIG. 8

# FIG. 9A

```
              ( START )
                  │
                  ▼
S1 ─┐  ┌──────────────────┐
    └──│ READ OUT DATA    │
       │ FROM RECEPTION   │
       │ BUFFER           │
       └──────────────────┘
                  │
                  ▼
S2 ─┐        ╱◇╲              NO
    └──    ╱      ╲  ──────────────────┐
         ◇ BLACK DATA ? ◇              │
           ╲      ╱                    │
             ╲◇╱                       ▼
              │ YES           ┌──────────────────┐
              ▼               │ STORE DATA       │─ S4
S3 ─┐        ╱◇╲     NO        │ IN FRAME         │
    └──    ╱  BIT   ╲ ────┐    │ MEMORY OF        │
         ◇ IMAGE DATA ◇   │    │ CORRESPONDING    │
           ╲    ?    ╱    │    │ COLOR            │
             ╲◇╱          │    └──────────────────┘
              │ YES       │              │
              ▼           ▼              │
S5 ─┐ ┌──────────────┐ ┌──────────┐      │
    └─│ DEVELOP DATA │ │ DEVELOP  │─ S6  │
      │ IN Y, M, C   │ │ DATA IN  │      │
      │ FRAME        │ │ Bk FRAME │      │
      │ MEMORIES     │ │ MEMORY   │      │
      └──────────────┘ └──────────┘      │
              │           │              │
              │           ◄──────────────┘
              ▼
          ( END )
```

# FIG. 9B

```
                    ( START )
                        |
   +------------------------------------------+
   |  SET NUMBER OF DATA TO BE PROCESSED      |~S7
   +------------------------------------------+
                        |
   +------------------------------------------+
   |  SET ADDRESS OF DATA TO BE PROCESSED     |~S8
   +------------------------------------------+
                        |
   +------------------------------------------+
   |  READ OUT Bk DATA FROM Bk BUFFER         |~S9
   +------------------------------------------+
                        |
        NO          /  DATA          \
      <-----------<  TO BE PRINTED     >~S10
                    \  EXISTENT ?     /
                        |
                       YES
   +------------------------------------------+
   |  READ Y,M,C DATA OF EQUAL PRINT          |~S11
   |  POSITION TO THAT OF Bk DATA             |
   +------------------------------------------+
                        |
        NO          /  DATA          \
      <-----------<  TO BE PRINTED     >~S12
                    \  EXISTENT ?     /
                        |
                       YES
   +------------------------------------------+
   |  WRITE DATA EQUAL TO Bk DATA             |~S13
   |  IN Y,M,C BUFFERS                        |
   +------------------------------------------+
                        |
        NO          /  SET NUMBER    \
      <-----------<  OF DATA HAVE BEEN >~S14
                    \  PROCESSED ?    /
                        |
                       YES
                    (  END  )
```

## FIG. 10A

```
                    ┌──────────┐
                    │  START   │
                    └────┬─────┘
                         │
                         ▼
        ┌────────────────────────┐
   S1 ──│ READ OUT DATA          │
        │ FROM RECEPTION         │
        │ BUFFER                 │
        └───────────┬────────────┘
                    │
                    ▼
   S2 ──     ◇                        NO
        BLACK DATA ?  ──────────────────────┐
              ◇                              │
              │ YES                          ▼
              │                  ┌─────────────────────┐
              ▼                  │ STORE DATA          │
   S3 ──    ◇         NO         │ IN FRAME            │── S4
       BIT              ──┐      │ MEMORY OF           │
   IMAGE DATA            │      │ CORRESPONDING       │
       ?                 │      │ COLOR               │
         ◇               │      └──────────┬──────────┘
         │ YES           │                 │
         ▼               ▼                 │
  ┌──────────────┐  ┌─────────────┐        │
S5│ DEVELOP DATA │  │ DEVELOP     │── S6    │
  │ IN Y,M,C     │  │ DATA IN     │        │
  │ FRAME        │  │ Bk FRAME    │        │
  │ MEMORIES     │  │ MEMORY      │        │
  └──────┬───────┘  └──────┬──────┘        │
         │                 │               │
         │◄────────────────┴───────────────┘
         ▼
    ┌─────────┐
    │   END   │
    └─────────┘
```

# FIG. 10B

```
                    ┌─────────┐
                    │  START  │
                    └─────────┘
                         │
                         ▼
        ┌──────────────────────────────────────┐
        │  SET NUMBER OF DATA TO BE PROCESSED   │──── S7
        └──────────────────────────────────────┘
                         │
         ┌───────────────┘
         │               ▼
         │  ┌──────────────────────────────────────┐
         │  │  SET ADDRESS OF DATA TO BE PROCESSED  │──── S8
         │  └──────────────────────────────────────┘
         │               │
         │               ▼
         │  ┌──────────────────────────────────────┐
         │  │    READ OUT Bk DATA FROM Bk BUFFER    │──── S9
         │  └──────────────────────────────────────┘
         │               │
         │               ▼
         │         ╱─────────────╲
         │  NO    ╱     DATA       ╲
         │◄──────┤  TO BE PRINTED   ├──── S10
         │        ╲   EXISTENT ?   ╱
         │         ╲─────────────╱
         │               │ YES
         │               ▼
         │  ┌──────────────────────────────────────┐
         │  │  READ Y,M,C DATA OF EQUAL PRINT       │
         │  │  POSITION TO THAT OF Bk DATA AND      │──── S11
         │  │  DATA OF ADJACENT PIXEL TO Bk DATA    │
         │  └──────────────────────────────────────┘
         │               │
         │               ▼
         │         ╱─────────────╲
         │  NO    ╱     DATA       ╲
         │◄──────┤  TO BE PRINTED   ├──── S12
         │        ╲   EXISTENT ?   ╱
         │         ╲─────────────╱
         │               │ YES
         │               ▼
         │  ┌──────────────────────────────────────┐
         │  │   WRITE DATA EQUAL TO Bk DATA         │──── S13
         │  │   IN Y,M,C BUFFERS                    │
         │  └──────────────────────────────────────┘
         │               │
         │◄──────────────┤
         │               ▼
         │         ╱─────────────╲
         │  NO    ╱   SET NUMBER   ╲
         └───────┤  OF DATA HAVE    ├──── S14
                  ╲ BEEN PROCESSED ╱
                   ╲─────────────╱
                         │ YES
                         ▼
                    ┌─────────┐
                    │   END   │
                    └─────────┘
```

EP 0 580 449 B1

# FIG. 11

| FIG. 11A |
|----------|
| FIG. 11B |

## FIG. 11A

```
                    ( START )
                        │
                        ▼
S7 ┌─────────────────────────────┐
   │ SET NUMBER OF DATA          │
   │ TO BE PROCESSED             │
   └─────────────────────────────┘
                        │
                        │◄──────────────────────── (B)
                        ▼
S8 ┌─────────────────────────────┐
   │ SET ADDRESS OF DATA         │
   │ TO BE PROCESSED             │
   └─────────────────────────────┘
                        │
                        ▼
S9 ┌─────────────────────────────┐
   │ READ DATA OF 48 DOTS        │
   │ OR MORE IN VERTICAL         │
   └─────────────────────────────┘
                        │
                        ▼
S10          ◇ DATA                   NO
       TO BE PRINTED EXISTENT ──────────► (C)
              ?
                        │ YES
                        ▼
S11 ┌─────────────────────────────┐
    │ SET CHAR START ADDRESS      │
    │ AND CLEAR CHAR COUNTER      │
    └─────────────────────────────┘
                        │
                        │◄──────────────────────────┐
                        ▼                            │
S12 ┌─────────────────────────────┐      S15 ┌──────────────────┐
    │ UPDATE ADDRESS IN MAIN      │          │ INCREMENT CHAR   │
    │ SCAN DIRECTION AND          │          │ COUNTER          │
    │ READ DATA                   │          └──────────────────┘
    └─────────────────────────────┘                  ▲
                        │                             │
                        ▼                             │
S13          ◇ DATA                   YES             │
       TO BE PRINTED EXISTENT ────────────────────────┘
              ?
                        │ NO
                        ▼
                       (A)
```

58

## FIG. 11B

(A)

S14 — SET CHAR COUNTER

S16 — READ FROM BUFFERS Y, M, C DATA CORRESPONDING TO DATA OF 48 DOTS OR MORE AND THE ADJACENT DATA

S17 — DATA TO BE PROCESSED EXISTENT ? — YES

NO

S18 — WRITE IN Y, M, C BUFFERS DATA EQUAL TO DATA TAKEN FROM CHAR START ADDRESS OF Bk BUFFER BY COUNT OF CHAR COUNTER

S19 — CLEAR ALL Bk DATA

(C)

S20 — CHAR COUNTER−1=0 ? — NO

YES

S21 — PROCESS COMPLETED ? — NO → (B)

YES

( END )

FIG. 12A

PRINTED

Y · B · BLACK (Bk)

A

B C D BLACK (Y,M,C)

BLACK (Bk)

BLACK (Bk)

Y

E F

B

Y

FIG. 12B

PRINTED

Y · B · BLACK (Bk)

A

B C D BLACK (Y,M,C)

BLACK (Bk)

BLACK(Bk;Y,M,C IN BOUNDARY)

Y

E F

B

Y

FIG. 12C

PRINTED

Y · B · BLACK (Bk)

A

B C D BLACK (Y,M,C)

BLACK (Bk)

BLACK (Y,M,C)

Y

E F

B

Y

EP 0 580 449 B1

## FIG. 13A

NOT PROCESSED

| Y PRINT BUFFER | M PRINT BUFFER | C PRINT BUFFER | Bk PRINT BUFFER |
|:---:|:---:|:---:|:---:|
| (a) | (b) | (c) | (d) |

# FIG. 13B

PROCESSED

Y PRINT BUFFER

M PRINT BUFFER

C PRINT BUFFER

Bk PRINT BUFFER

E F

E F

A

B C D

H

(a)

(b)

(c)

(d)

FIG. 14A

NOT PROCESSED

Y PRINT BUFFER

M PRINT BUFFER

C PRINT BUFFER

Bk PRINT BUFFER

A

B C D

E F

H

(a)

(b)

(c)

(d)

EP 0 580 449 B1

# FIG. 14B

PROCESSED

| Y PRINT BUFFER | M PRINT BUFFER | C PRINT BUFFER | Bk PRINT BUFFER |
|:---:|:---:|:---:|:---:|
| (a) | (b) | (c) | (d) |

EP 0 580 449 B1

# FIG. 15A

NOT PROCESSED

Y PRINT BUFFER

M PRINT BUFFER

C PRINT BUFFER

Bk PRINT BUFFER

(a)

(b)

(c)

(d)

# FIG. 15B

PROCESSED

| Y PRINT BUFFER | M PRINT BUFFER | C PRINT BUFFER | Bk PRINT BUFFER |
|:---:|:---:|:---:|:---:|
| (a) | (b) | (c) | (d) |

EP 0 580 449 B1

## FIG. 16

# FIG. 17

PRINTED

BLACK

A B C D
E F G

B          G

# FIG. 18A

NOT PROCESSED

| Y PRINT BUFFER | M PRINT BUFFER | C PRINT BUFFER | Bk PRINT BUFFER |
|---|---|---|---|

A B C D
E F G

A B C D
E F G

A B C D
E F G

(a)

(b)

(c)

(d)

EP 0 580 449 B1

## FIG. 18B

| Y PRINT BUFFER | M PRINT BUFFER | C PRINT BUFFER | Bk PRINT BUFFER |
|---|---|---|---|

PROCESSED

A B C D
E F G

(a)  (b)  (c)  (d)

EP 0 580 449 B1

## FIG. 19

| FIG. 19A |
|---|
| FIG. 19B |

## FIG. 19A

```
                    ( START )
   ©────────────────────┐
                        │
   S1 ┌─────────────────▼─────────────────┐
      │ SET ADDRESS OF DATA TO BE PROCESSED │
      │ FOR EACH OF Y, M, C                 │
      └─────────────────┬─────────────────┘
   S2 ┌─────────────────▼─────────────────┐
      │ READ OUT Y, M, C DATA FROM BUFFERS │
      └─────────────────┬─────────────────┘
                        │
   S3          ◇ ALL Y, M, C DATA ARE              NO
               EQUAL, AND BESIDES, DATA TO BE ─────────► (B)
                    PRINTED IS EXISTENT ◇
                        │ YES
   S4 ┌─────────────────▼─────────────────┐
      │ SET BLACK START ADDRESS, AND       │
      │ CLEAR BLACK END ADDRESS            │
      └─────────────────┬─────────────────┘
      ┌──────────────────────┐
      │                      │
   S5 ┌──────────────────────▼────────────┐
      │ UPDATE ADDRESS IN MAIN SCAN        │
      │ DIRECTION, AND READ Y, M, C DATA   │
      └─────────────────┬─────────────────┘
   S6          ◇ ALL Y, M, C DATA ARE              NO
               EQUAL, AND BESIDES, DATA TO BE ─────────┐
                    PRINTED IS EXISTENT ◇             │
                        │ YES                         │
   S7 ┌─────────────────▼─────────────────┐           │
      │ UPDATE BLACK END ADDRESS           │           ▼
      └───────────────────────────────────┘          (A)
```

71

# FIG. 19B

Ⓐ

S8 — ALL Y, M, C DATA ARE EQUAL, BUT DATA TO BE PRINTED IS NOT EXISTENT ?

NO

S9 — SET "1" IN SPACE COUNTER

S10 — UPDATE ADDRESS IN MAIN SCAN DIRECTION, AND READ Y, M, C DATA

S12 — INCREMENT SPACE COUNTER

S11 — ALL Y, M, C DATA ARE EQUAL, BUT DATA TO BE PRINTED IS NOT EXISTENT ?

YES

NO

S13 — SPACE COUNTER INDICATES OVER ONE LINE ?

NO

YES

S14 — WRITE IN Bk BUFFER Y, M, C DATA OF BLACK START ADDRESS TO BLACK END ADDRESS, AND CLEAR Y, M, C BUFFERS

Ⓑ

NO
Ⓒ — SET NUMBER OF DATA HAVE BEEN PROCESSED ?

S15

YES

END

## FIG. 20A

$$A \left\{ \quad \underline{XX \ YY \ ZZ} \right\} \longleftarrow Bk$$

$$B \left\{ \begin{array}{l} 123456789\text{あいうえお} \\ 123456789\text{あいうえお} \\ 123456789\text{あいうえお} \end{array} \right\} \longleftarrow Bk$$

C { — Y, Bk

D { ABCDE FGHIJ   E{ 123 } ← M, Bk

C    Bk

## FIG. 20B

BLACK INK → 2 ← COLOR INK

## FIG. 20C

2 ← COLOR INK

73

# FIG. 21

START

S1 — READ OUT DATA FROM RECEPTION BUFFER

BLACK DATA EXISTENT ? S2

YES

NO

ANY OTHER COLOR DATA EXISTENT AT POSITION ADJACENT TO BLACK DATA ? S7

NO

YES

S9 — DEVELOP BLACK DATA IN Bk BUFFER

S8 — DEVELOP BLACK DATA IN Y, M, C BUFFERS

S10 — DEVELOP COLOR DATA IN RESPECTIVE COLOR BUFFERS

DATA EXISTENT IN RECEPTION BUFFER ? S11

NO

YES

S12 — RECORDING

END

# FIG. 22

```
          ( START )
              │
              ▼
S1 ─┌─────────────────────┐
    │ READ OUT DATA FROM  │
    │ RECEPTION BUFFER    │
    └─────────────────────┘
              │
              ▼
     YES   ╱  BLACK  ╲   NO
    ◄─────◄ DATA EXISTENT ►─────►
           ╲    ?    ╱  S2
              │
              ▼
S3 ╱                  ╲   NO
  ◄ CHARACTER CODED DATA ? ►─────►
   ╲                  ╱
              │ YES
              ▼
S7 ╱      ANY         ╲
  NO ╱ OTHER COLOR DATA ╲  YES
  ◄─◄ EXISTENT AT POSITION ►─────►
     ╲ ADJACENT TO BLACK ╱
      ╲    DATA ?    ╱
              │
S9 ┌──────────────┐         S8 ┌─────────────────────┐
   │ DEVELOP BLACK│            │ DEVELOP BLACK DATA  │
   │ DATA IN Bk   │            │ IN Y, M, C BUFFERS  │
   │ BUFFER       │            └─────────────────────┘
   └──────────────┘

S10 ┌─────────────────────┐
    │ DEVELOP COLOR DATA IN│
    │ RESPECTIVE COLOR BUFFERS │
    └─────────────────────┘
              │
              ▼
     NO    ╱    DATA    ╲   YES
    ◄─────◄ EXISTENT IN RECEPTION ►─────►
           ╲  BUFFER ?  ╱   S11
              │
S12 ┌───────────┐
    │ RECORDING │
    └───────────┘
              │
              ▼
          ( END )
```

FIG. 23B

1
10

FIG. 23A

3

2

1y 1m 1c 1k

6

5m 5c 5k

5Y

4

# FIG. 24

| EMBODIED SAMPLES/ SAMPLES TO BE COMPARED | INK NO. | BLOTTING RATE | | | |
|---|---|---|---|---|---|
| | | YELLOW | MAGENTA | CYAN | BLACK |
| EMBODIED SAMPLE 11 | (1) | 2.3 | 2.3 | 2.3 | 1.7 |
| EMBODIED SAMPLE 12 | (2) | 3.3 | 3.3 | 3.3 | 1.7 |
| EMBODIED SAMPLE 13 | (3) | 2.8 | 2.8 | 2.8 | 1.8 |
| EMBODIED SAMPLE 14 | (4) | 3.0 | 3.0 | 3.0 | 1.8 |
| EMBODIED SAMPLE 15 | (5) | 3.4 | 3.4 | 3.4 | 2.2 |
| EMBODIED SAMPLE 16 | (6) | 2.0 | 2.0 | 2.0 | 1.9 |
| EMBODIED SAMPLE 17 | (7) | 2.6 | 2.6 | 2.6 | 1.8 |
| EMBODIED SAMPLE 18 | (8) | 2.5 | 2.5 | 2.5 | 2.2 |
| SAMPLE TO BE COMPARED 1 | (9) | 1.7 | 1.7 | 1.7 | 2.8 |
| SAMPLE TO BE COMPARED 2 | (10) | 1.6 | 1.6 | 1.6 | 2.6 |

# FIG. 25

| EMBODIED SAMPLES/ SAMPLES TO BE COMPARED | INK NO. | FIXING TIME (SECOND) | | | |
|---|---|---|---|---|---|
| | | YELLOW | MAGENTA | CYAN | BLACK |
| EMBODIED SAMPLE 11 | (1) | 5 | 5 | 5 | 40 |
| EMBODIED SAMPLE 12 | (2) | 5 | 5 | 5 | 40 |
| EMBODIED SAMPLE 13 | (3) | 5 | 5 | 5 | 35 |
| EMBODIED SAMPLE 14 | (4) | 5 | 5 | 5 | 25 |
| EMBODIED SAMPLE 15 | (5) | 5 | 5 | 5 | 25 |
| EMBODIED SAMPLE 16 | (6) | 10 | 10 | 10 | 30 |
| EMBODIED SAMPLE 17 | (7) | 5 | 5 | 5 | 30 |
| EMBODIED SAMPLE 18 | (8) | 5 | 5 | 5 | 20 |
| SAMPLE TO BE COMPARED 1 | (9) | 30 | 30 | 30 | 5 |
| SAMPLE TO BE COMPARED 2 | (10) | 35 | 35 | 35 | 15 |

# FIG. 26

| EMBODIED SAMPLES/ SAMPLES TO BE COMPARED | INK NO. | BLEEDING | | BLACK CHARACTER QUALITY |
|---|---|---|---|---|
| | | BLACK/ COLOR | COLOR/ COLOR | |
| EMBODIED SAMPLE 11 | (1) | ◯ | ◯ | ◯ |
| EMBODIED SAMPLE 12 | (2) | ◯ | ◯ | ◯ |
| EMBODIED SAMPLE 13 | (3) | ◯ | ◯ | ◯ |
| EMBODIED SAMPLE 14 | (4) | ◯ | ◯ | ◯ |
| EMBODIED SAMPLE 15 | (5) | ◯ | ◯ | △ |
| EMBODIED SAMPLE 16 | (6) | △ | △ | ◯ |
| EMBODIED SAMPLE 17 | (7) | ◯ | ◯ | ◯ |
| EMBODIED SAMPLE 18 | (8) | ◯ | ◯ | △ |
| SAMPLE TO BE COMPARED 1 | (9) | ✕ | ✕ | ✕ |
| SAMPLE TO BE COMPARED 2 | (10) | ✕ | ✕ | ✕ |